# EUROPÄISCHE PATENTSCHRIFT

(11) **EP 4 410 173 B1**
(45) Veröffentlichungstag und Bekanntmachung des Hinweises auf die Patenterteilung: **04.02.2026**
(21) Anmeldenummer: 23216387.3
(22) Anmeldetag: 13.12.2023
(51) Int. Cl.: A47L 15/00, A47L 15/24

(54) **GEWERBLICHE SPÜLMASCHINE SOWIE VERFAHREN ZUM BETREIBEN EINER GEWERBLICHEN SPÜLMASCHINE**
COMMERCIAL DISHWASHER AND METHOD FOR OPERATING A COMMERCIAL DISHWASHER
LAVE-VAISSELLE INDUSTRIEL ET PROCÉDÉ DE FONCTIONNEMENT D'UN LAVE-VAISSELLE INDUSTRIEL

(30) Priorität: 06.02.2023 DE 102023102822
(43) Veröffentlichungstag der Anmeldung: 07.08.2024
(73) Patentinhaber: Illinois Tool Works Inc., Glenview IL 60025 (US)
(72) Erfinder: DISCH, Harald, Glenview, Illinois, 60025 (US); SCHREMPP, Martin, Glenview, Illinois, 60025 (US)
(74) Vertreter: Meissner Bolte Partnerschaft mbB

(56) Entgegenhaltungen:
- CN-B- 108 814 501
- DE-A1- 102008 017 597
- DE-A1- 102020 128 333
- US-B2- 10 335 011

## Beschreibung

Die vorliegende Erfindung betrifft allgemein das Fachgebiet des gewerblichen Spülens und insbesondere eine gewerbliche Spülmaschine sowie ein Verfahren zum Betreiben einer gewerblichen Spülmaschine.

Die Druckschrift DE 10 2008 017 597 A1 betrifft eine Geschirrspülmaschine in Gestalt eines Programmautomaten, welche eine Programmsteuereinrichtung zur Ausführung von mindestens einem Behandlungsprogramm, eine Behandlungskammer, in welche Spülgut manuell einsetzbar und herausnehmbar ist, einen Tank in welchen Flüssigkeit aus der Behandlungskammer durch Schwerkraft abfließen kann, und ein Waschsystem mit einer Waschpumpe und einem Waschleitungssystem zum Fördern von Waschflüssigkeit während einer Waschphase aus dem Tank durch Waschdüsen in die Behandlungskammer aufweist. Um eine wirkungsvolle Behandlung (Reinigung und Trocknung) des Spülgutes bei einem möglichst geringen Verbrauch von Ressourcen an Wasser, Chemikalien und insbesondere Energie zu erzielen, ist vorgesehen, dass die Geschirrspülmaschine ferner eine Spülgutdetektorvorrichtung aufweist, welche ausgelegt ist, die Art des zu behandelnden Spülgutes zu erfassen, wobei ferner die Programmsteuereinrichtung ausgelegt ist, in Abhängigkeit von der erfassten Art des zu behandelnden Spülgutes automatisch ein vorab festgelegtes oder festlegbares Behandlungsprogramm für wenigstens die Waschphase auszuwählen und die dem ausgewählten Behandlungsprogramm zugehörigen Prozessparameter einzustellen.

Die Erfindung betrifft insbesondere eine gewerbliche Spülmaschine, insbesondere eine gewerbliche Geschirr- oder Utensilienspülmaschine, welche als Transportspülmaschine oder als Programmautomat ausgebildet ist. Die hierin berücksichtigte gewerbliche Spülmaschine weist mindestens ein Waschsystem zum Waschen von Spülgut, mindestens ein Klarspülsystem zum Klarspülen des gewaschenen Spülguts und optional mindestens ein Trocknungssystem zum optionalen Trocknen des klargespülten Spülguts auf.

Die erfindungsgemäße Spülmaschine weist insbesondere eine Steuereinrichtung auf, welche ausgebildet ist, insbesondere nach dem Prinzip des maschinellen Lernens "künstlich" Wissen aus Erfahrung zu generieren. Hierzu ist die erfindungsgemäße Spülmaschine und insbesondere die Steuereinrichtung der Spülmaschine ausgebildet, aus Beispielen zu lernen und nach Beendigung der Lernphase das während der Lernphase generierte Wissen zu verallgemeinern.

Insbesondere ist die erfindungsgemäße Spülmaschine, entweder in Gestalt eines so genannten Programmautomaten oder in Gestalt einer Transportspülmaschine, ausgebildet, im Rahmen einer Lern- oder Beobachtungsphase zu ermitteln, zu welchen Zeiträumen einer Spülschicht oder eines Spültags der Spülmaschine, welche Spülgutklasse vorwiegend zu behandeln ist. Auf Grundlage dieses Wissens ist die Spülmaschine ferner ausgebildet, vorzugsweise automatisch und noch bevorzugter wahlweise automatisch entsprechende optimierte Behandlungsparameter zur Behandlung des Spülguts einzustellen.

Gemäß Realisierungen der erfindungsgemäßen Spülmaschine ist vorgesehen, dass dieser eine Auswerteeinrichtung zugeordnet ist, welche ausgebildet ist, insbesondere im Zuge eines Profiling-Prozesses anhand der aufgenommenen Bilder ein das zeitliche Nutzungsverhalten des Betreibers der Spülmaschine betreffendes Gesamtbild bzw. Muster zu erstellen.

Ein "Profiling-Prozess" im Sinne der vorliegenden Offenbarung bezeichnet die nutzbare Erstellung eines Gesamtbildes bzw. Musters des Nutzungsverhaltens des Betreibers der Spülmaschine für bestimmte Zwecke und insbesondere zur Optimierung des Betriebs der Spülmaschine insbesondere im Hinblick auf den Resourcenverbrauch (Energie, Wasser und/oder Chemikalien) und/oder im Hinblick auf die Reinigungseffizient der Spülmaschine und/oder im Hinblick auf eine Arbeitsentlastung des Spülpersonals. Die Erstellung des Gesamtbildes bzw. Musters des Nutzungsverhaltens des Betreibers der Spülmaschine erfolgt vorzugsweise durch das Zusammenführen von während einer Lern- oder Beobachtungsphase generierten Daten, sowie deren anschließende Analyse und zweckbezogenen Auswertung.

Denkbar in diesem Zusammenhang ist es somit, dass die der Spülmaschine zugeordnete Auswerteeinrichtung ausgebildet ist, in Abhängigkeit von dem erstellten, das zeitliche Nutzungsverhalten des Betreibers der Spülmaschine betreffenden Gesamtbild bzw. Muster eine Statistik und/oder eine entsprechende Meldung zu generieren und an insbesondere den Betreiber der Spülmaschine auszugeben, wobei die Meldung vorzugsweise eine Empfehlung für einen insbesondere im Hinblick auf die Reinigungseffizienz und im Hinblick auf eine Einsparung von Ressourcen optimierten Betrieb der Spülmaschine enthält.

Insbesondere ist eine der Spülmaschine zugeordnete Steuereinrichtung ausgebildet sein, in Abhängigkeit von dem erstellten, das zeitliche Nutzungsverhalten des Betreibers der Spülmaschine betreffenden Gesamtbild bzw. Muster ansteuerbare Komponenten der Spülmaschine vorzugsweise automatisch und noch bevorzugter wahlweise automatisch proaktiv und insbesondere prädiktiv einzustellen, so dass die Spülmaschine insbesondere im Hinblick auf den Resourcenverbrauch (Energie, Wasser und/oder Chemikalien) und/oder im Hinblick auf die Reinigungseffizient der Spülmaschine und/oder im Hinblick auf eine Arbeitsentlastung des Spülpersonalseine möglichst optimal betrieben wird.

Im Sinne des allgemeinen Sprachgebrauchs bedeutet der hierin verwendete Begriff "proaktiv" durch differenzierte Vorausplanung und zielgerichtetes Handeln die Entwicklung eines Reinigungsvorgangs der Spülmaschine selbst bestimmend und eine Situation herbeiführend.

Der hierin verwendete Begriff "prädiktiv" bedeutet hinweisend, prognostisch, vorhersagbar, vorhersagend, vorhersehend bzw. voraussehbar.

Bei der erfindungsgemäßen Spülmaschine handelt es sich insbesondere um eine gewerbliche Geschirr- oder Utensilienspülmaschine, welche als Transportspülmaschine oder als Programmautomat ausgebildet ist. Die Spülmaschine weist mindestens ein Waschsystem zum Versprühen von Waschflüssigkeit in einer Waschzone bzw. während einer Waschphase und mindestens ein Klarspülsystem zum Versprühen von Klarspülflüssigkeit in einer Klarspülzone bzw. während einer Klarspülphase auf. Vorzugsweise weist die erfindungsgemäße Spülmaschine ferner eine Steuereinrichtung auf, welche ausgebildet ist, das mindestens eine Waschsystem und/oder das mindestens eine Klarspülsystem gemäß einem ausgewählten und insbesondere vorab festgelegten Ablaufprogramm geeignet anzusteuern.

Die Erfindung betrifft ferner ein Verfahren zum Betreiben einer solchen Spülmaschine.

Programmautomaten sind manuell beladbare und entladbare Spülmaschinen. Solche Programmautomaten können Geschirrkorbdurchschubspülmaschinen, auch Haubenspülmaschinen genannt, oder Frontlader sein. Frontlader können Untertischmaschinen, Auftischmaschinen oder freistehende Spülmaschinen mit Frontbeschickung sein.

Eine als Programmautomat ausgebildete Spülmaschine weist üblicherweise eine Behandlungskammer zum Reinigen von Spülgut auf. In der Regel ist unterhalb der Behandlungskammer ein Waschtank angeordnet, in welchem Flüssigkeit aus der Behandlungskammer durch Schwerkraft zurückfließen kann. Im Waschtank befindet sich Waschflüssigkeit, welche üblicherweise Wasser ist, dem ggf. eine Reinigerchemie zugeführt werden kann.

Eine als Programmautomat ausgebildete Spülmaschine weist ferner ein Waschsystem mit einer Waschpumpe, ein mit der Waschpumpe verbundenes Leitungssystem und mit einer Vielzahl von in mindestens einem Wascharm ausgebildeten Sprühdüsen auf. Die sich im Waschtank befindliche Waschflüssigkeit kann von der Waschpumpe über das Leitungssystem zu den Sprühdüsen gefördert und durch die Sprühdüsen in der Behandlungskammer auf das zu behandelnde Spülgut gesprüht werden. Die versprühte Waschflüssigkeit fließt anschließend in den Waschtank zurück.

Transportspülmaschinen sind insbesondere Bandtransportspülmaschinen oder Korbtransportspülmaschinen. Transportspülmaschinen finden üblicherweise im gewerblichen Bereich Anwendung. Im Gegensatz zu Programmautomaten, bei welchen das zu behandelnde Spülgut bzw. das zu reinigende Spülgut während der Behandlung/Reinigung ortsfest in der Spülmaschine verbleibt, findet bei Transportspülmaschinen ein Transport des Spülguts durch verschiedene Behandlungszonen der Transportspülmaschine statt.

Eine Transportspülmaschine weist üblicherweise mindestens eine Vorwaschzone sowie mindestens eine Hauptwaschzone auf, welche in der Transportrichtung des Spülguts gesehen nach der Vorwaschzone angeordnet ist. In Transportrichtung gesehen nach der Hauptwaschzone ist in der Regel mindestens eine Nachwaschzone und mindestens eine der Nachwaschzone nachgeschaltete Klarspülzone angeordnet. In Transportrichtung gesehen läuft das entweder unmittelbar auf ein Transportband aufgenommene Spülgut oder durch Körbe gehaltene Spülgut in der Transportrichtung üblicherweise durch einen Einlauftunnel, die sich daran anschließende Vorwaschzone, Hauptwaschzone, Nachwaschzone, Klarspülzone, Trocknungszone in eine Auslaufstrecke ein.

Den Waschzonen der Transportspülmaschine ist jeweils ein Waschsystem zugeordnet, welches eine Waschpumpe und ein mit der Waschpumpe verbundenes Leitungssystem aufweist, über welches den Sprühdüsen der Waschzone Waschflüssigkeit zugeführt wird. Die den Sprühdüsen zugeführte Waschflüssigkeit wird in der jeweiligen Waschzone auf das Spülgut gesprüht, welches von einer Transportvorrichtung der Transportspülmaschine durch die jeweiligen Waschzonen transportiert wird. Jeder Waschzone ist ein Waschtank zugeordnet, in welchem versprühte Flüssigkeit aufgenommen wird und/oder in welchem Waschflüssigkeit für die Sprühdüsen der betreffenden Zone bereitgestellt wird.

Bei den üblicherweise aus dem Stand der Technik bekannten Transportspülmaschinen wird Klarspülflüssigkeit in Form von Frischwasser, welches rein oder mit weiteren Zusätzen, wie beispielsweise Klarspüler, versetzt sein kann, über die Sprühdüsen der Klarspülzone auf das Spülgut gesprüht. Zumindest ein Teil der versprühten Klarspülflüssigkeit wird über ein Kaskadensystem entgegen der Transportrichtung des Spülguts von Zone zu Zone transportiert.

Die versprühte Klarspülflüssigkeit wird in einem Tank (Nachwaschtank) der Nachwaschzone aufgefangen, von welchem sie über die Waschpumpe des zur Nachwaschzone gehörenden Waschsystems zu den Sprühdüsen (Nachwaschdüsen) der Nachwaschzone gefördert wird. In der Nachwaschzone wird Waschflüssigkeit von dem Spülgut abgespült. Die hierbei anfallende Flüssigkeit fließt in den Waschtank der zumindest einen Hauptwaschzone, welche in Transportrichtung des Spülguts gesehen, der Nachwaschzone vorgeschaltet ist. Hier wird die Flüssigkeit üblicherweise mit einer Reinigerchemikalie versehen und durch ein zu dem Waschsystem der Hauptwaschzone gehörenden Pumpensystem (Waschpumpe) über die Düsen (Waschdüsen) der Hauptwaschzone auf das Spülgut versprüht. Von dem Waschtank der Hauptwaschzone fließt die Flüssigkeit - sofern keine weitere Hauptwaschzone vorgesehen ist - anschließend in den Vorwaschtank der Vorwaschzone. Die Flüssigkeit in dem Vorwaschtank wird über ein zu dem Waschsystem der Vorwaschzone gehörenden Pumpensystem über die Vorwaschdüse der Vorwaschzone auf das Spülgut gesprüht, um grobe Verunreinigungen von dem Spülgut zu entfernen.

Unabhängig davon, ob die Spülmaschine als Programmautomat oder als Transportspülmaschine ausgebildet ist, umfassen die hierin berücksichtigten und insbesondere gewerblich ausgeführten Spülmaschinen somit üblicherweise mindestens ein Waschsystem, welches eine Waschpumpe aufweist, die über die Dauer eines Waschprozesses in der Behandlungskammer (bei Programmautomaten) bzw. in der entsprechenden Behandlungszone (bei Transportspülmaschinen) eine quasikonstante Wasserumwälzung gewährleistet. Die jeweiligen Waschpumpen der Waschsysteme werden durch eine zur Spülmaschine gehörenden Steuereinrichtung (Maschinensteuerung) gemäß einem ausgewählten und insbesondere vorab festgelegten Ablaufdiagramm ein- bzw. ausgeschaltet.

Die Steuereinrichtung dient ferner dazu, weitere in dem ausgewählten Ablaufprogramm festgelegte Prozessparameter des Waschprozesses durch Ansteuerung geeigneter Komponenten der Spülmaschine einzustellen. Hierzu gehört beispielsweise die Temperatur der während des Waschprozesses versprühten Waschflüssigkeit, der Düsendruck, mit welchem die Waschflüssigkeit während des Waschprozesses auf das Spülgut gesprüht wird, ggf. die pro Zeiteinheit während des Waschprozesses versprühte Menge an Waschflüssigkeit und die Spülgut-Kontaktzeit, das heißt die Zeitdauer, während welcher das Spülgut mit Waschflüssigkeit beaufschlagt wird.

Zusätzlich ist bei den hierin berücksichtigten Spülmaschinen mindestens ein Klarspülsystem vorgesehen, um bei Programmautomaten während einer Klarspülphase in der Behandlungskammer bzw. bei Transportspülmaschinen während der Behandlung in einer Klarspülzone Klarspülflüssigkeit zu versprühen. Die während des Klarspülprozesses einzuhaltenden Prozessparameter sind ebenfalls in einem ausgewählten und vorab festgelegten Ablaufprogramm definiert und werden durch eine geeignete Ansteuerung von entsprechenden ansteuerbaren Komponenten der Spülmaschine durch die Steuereinrichtung während des Klarspülprozesses eingestellt. Zu diesen Prozessparametern gehören beispielsweise die Temperatur der während des Klarspülprozesses versprühten Klarspülflüssigkeit, der Düsendruck, mit welchem die Klarspülflüssigkeit während des Klarspülprozesses auf das Spülgut gesprüht wird, ggf. die pro Zeiteinheit während des Klarspülprozesses versprühte Menge an Klarspülflüssigkeit und die Spülgut-Kontaktzeit, das heißt die Zeitdauer, während welcher das Spülgut mit Klarspülflüssigkeit beaufschlagt wird.

Im Gegensatz zu Transportspülmaschinen erfolgen bei Programmautomaten die beiden Hauptprozessschritte "Waschphase" und "Klarspülphase" zeitlich aufeinander folgend, aber nicht räumlich getrennt in einer Zone (Behandlungskammer).

Hierzu ist eine als Programmautomat ausgebildete Spülmaschine normalerweise mit zwei voneinander unabhängigen Flüssigkeitssystemen ausgestattet, die vorzugsweise vollständig voneinander getrennt sind. Eines dieser beiden Flüssigkeitssysteme ist ein Waschflüssigkeitskreislauf, bei welchem - zum Zwecke der Reinigung des Spülguts - eine Umwälzung der Waschflüssigkeit aus dem bereits erwähnten Waschtank unterhalb der Behandlungskammer durchgeführt wird. Das andere Flüssigkeitssystem ist ein Klarspülflüssigkeitssystem, welches üblicherweise einen Wassererwärmer zur Erwärmung von als Klarspülflüssigkeit eingesetztem Frischwasser aufweisen kann.

Unabhängig von der Ausgestaltung der Spülmaschine als Programmautomat oder als Transportspülmaschine ist die Hauptaufgabe der Klarspülung mit Klarspülflüssigkeit darin zu sehen, die nach der Waschphase auf dem Spülgut noch befindliche Waschflüssigkeit (Lauge) zu entfernen. Demnach kommt als Klarspülflüssigkeit vorzugsweise Frischwasser zum Einsatz, welchem ein Klarspüler zudosiert sein kann.

Bei Programmautomaten dient die bei der Klarspülung in den unterhalb der Behandlungskammer angeordneten Tank abfließende Klarspülflüssigkeit zusätzlich zur Regeneration der in dem Tank aufgenommenen Waschflüssigkeit, da die während der Klarspülphase in der Behandlungskammer versprühte Klarspülflüssigkeit (reines Frischwasser oder mit Klarspüler vermischtes Frischwasser) durch Schwerkraft in den unterhalb der Behandlungskammer angeordneten Tank fließt. Bevor auf diese Weise während der Klarspülphase zur Regeneration der Waschflüssigkeit neue Waschflüssigkeit in den Tank gelangt, wird bei Programmautomaten die gleiche Menge an Waschflüssigkeit aus dem Tank abgepumpt.

Spülmaschinen, der hierin berücksichtigen Art, d.h. gewerbliche Spülmaschinen, die als Transportspülmaschinen oder als Programmautomat ausgebildet sind, weisen in der Regel eine Steuereinrichtung auf, in welcher mehrere vorab festgelegte Behandlungsprogramme abgelegt sind. Die Behandlungsprogramme definieren unterschiedliche Behandlungsparameter für die einzelnen Prozessschritte beim Waschen, Klarspülen und ggf. Trocken des Spülguts. Die Behandlungsparameter sind insbesondere an die von der Spülmaschine zu behandelnde Spülgutart oder Spülgutklasse angepasst.

Das Vorsehen unterschiedlicher Behandlungsprogramme basiert auf der Erkenntnis, dass unterschiedliche Spülgutarten oder Spülgutklassen aufgrund ihrer Gebrauchsanwendung, ihres Verschmutzungsgrads, ihrer Form und/oder aufgrund des Materials unterschiedliche Behandlungsparameter für die einzelnen Prozessschritte (d.h. Waschen, Klarspülen und ggf. Trocknen) verlangen.

Ein Nachteil bei heutigen Spülmaschinen ist jedoch darin zu sehen, dass in der Regel keine automatische Differenzierung der zu behandelnden Spülgutarten vorgenommen wird, so dass die herkömmlichen Behandlungsprogramme oftmals als Kompromiss so ausgelegt sind, dass sie für mehrere unterschiedliche Spülgutarten oder Spülgutklassen verwendbar sind.

Bei herkömmlichen Spülmaschinen der hierin berücksichtigten Art unterscheiden sich die einzelnen Programme hauptsächlich in der Laufzeitlänge (Zyklusdauer) der Behandlungsphasen oder - im Falle von speziellen Programmen insbesondere für die Behandlung von Trinkgläsern - in den Temperaturparametern der Waschphase und der Klarspülphase.

Üblicherweise hat bei den aus dem Stand der Technik bekannten Spülmaschinen das Bedienpersonal die Möglichkeit, beispielsweise bei leicht verschmutztem Spülgut, wie etwa bei Trinkgläsern, ein kürzeres Programm und bei stärker oder stark verschmutztem Spülgut ein längeres Programm zu wählen.

In der Praxis wird seitens des Bedienpersonals und/oder aufgrund stressbedingter Situationen in der Spülküche die Möglichkeit der manuellen Programmwahl nur selten genutzt, so dass infolgedessen unabhängig von der tatsächlich zu spülenden Spülgutart bzw. Spülgutklasse für die Behandlung des Spülguts hauptsächlich ein werkseitig voreingestelltes Programm zum Einsatz kommt.

Kommt bei der Behandlung des Spülguts ein werkseitig voreingestelltes Programm zum Einsatz, welches in der Regel derart als Kompromiss ausgelegt ist, dass es mehr oder weniger effizient für mehrere Spülgutklassen verwendbar ist, werden beispielsweise leicht verschmutzte Spülgutteile, wie etwa Trinkgläser, unwirtschaftlich lange und mit höheren Temperaturen gespült, als dies tatsächlich erforderlich wäre. Andererseits besteht die Gefahr, dass beispielsweise Spülgut mit schwerer zu entfernenden Verschmutzungen, insbesondere Essensrückständen, wie etwa Kochutensilien und/oder Bestecke, nicht ausreichend gereinigt bzw. behandelt werden, so dass unter Umständen mehrere Behandlungsdurchläufe oder zusätzliche manuelle Reinigungen notwendig sind.

Ausgehend von der genannten Problemstellung liegt somit der vorliegenden Erfindung die Aufgabe zu Grunde, eine Spülmaschine der eingangs genannten Art, d.h. eine gewerbliche Spülmaschine, welche als Transportspülmaschine oder als Programmautomat ausgebildet ist, dahingehend weiterzubilden, dass diese möglichst ohne Eingriff des Spülpersonals während einer Spülschicht möglichst effizient betrieben werden kann.

Durch die Erfindung soll insbesondere die Aufgabe gelöst werden, eine Spülmaschine der hierin berücksichtigten Art, d.h. eine gewerbliche Spülmaschine, welche als Transportspülmaschine oder als Programmautomat ausgebildet ist, bereitzustellen, bei welcher durch effiziente Nutzung der Ressourcen (Frischwasser, Chemikalien und Energie) im Betrieb der Spülmaschine für alle zu behandelnden Spülgutklassen gute Behandlungsergebnisse kann. Der im Hinblick auf Ressourcen effiziente Betrieb der Spülmaschine soll insbesondere auch ohne manuellen Eingriff durch das Bedienpersonal möglich sein, ohne dass die Qualität der Behandlung/Reinigung des Spülguts negativ beeinflusst wird.

Darüber hinaus soll die Aufgabe gelöst werden, ein entsprechendes Verfahren zum Betreiben einer solchen gewerblichen Spülmaschine anzugeben.

Die der Erfindung zu Grunde liegende Aufgabe wird im Hinblick auf die Spülmaschine durch den Gegenstand des unabhängigen Patentanspruchs 1 gelöst, wobei vorteilhafte Weiterbildungen der erfindungsgemäßen Spülmaschine in den abhängigen Patentansprüchen 2 bis 14 angegeben sind.

Im Hinblick auf das Verfahren wird die der Erfindung zu Grunde liegende Aufgabe durch den Gegenstand des nebengeordneten Patentanspruchs 15 gelöst.

Demgemäß betrifft die Erfindung insbesondere eine gewerbliche Spülmaschine mit mindestens einem Waschsystem zum Waschen von Spülgut, mit mindestens einem Klarspülsystem zum Klarspülen des gewaschenen Spülguts und optional mit einem Trocknungssystem zum optimalen Trocknen des klargespülten Spülguts.

Die erfindungsgemäße Spülmaschine weist ein Kamerasystem auf, welches ausgebildet ist, vorzugsweise kontinuierlich oder zu vorab festgelegten oder festlegbaren Zeiten und/oder Ereignissen Bilder von dem in der Spülmaschine zu behandelnden Spülgut oder von dem in der Spülmaschine behandelten Spülgut aufzunehmen.

Erfindungsgemäß ist insbesondere vorgesehen, dass die Spülmaschine eine Auswerteeinrichtung aufweist, welche ausgebildet ist, insbesondere im Zuge eines Profiling-Prozesses anhand der aufgenommenen Bilder ein das zeitliche Nutzungsverhalten des Betreibers der Spülmaschine betreffendes Gesamtbild bzw. Muster zu erstellen.

Mit der vorliegenden Erfindung wird ein gänzlich neuer, aus dem Fachgebiet des gewerblichen Spülens bislang nicht bekannter Ansatz verfolgt. Insbesondere verfügt die erfindungsgemäße Spülmaschine über eine gewisse "Intelligenz", da mit Hilfe der Auswerteeinrichtung künstliches Wissen aus Erfahrung generiert wird.

Die Spülmaschine und insbesondere die Auswerteeinrichtung lernt aus Beispielen während einer Lern- oder Beobachtungsphase und kann diese nach Beendigung der Lern- oder Beobachtungsphase verallgemeinern. Dazu bauen Algorithmen der Auswerteeinrichtung beim maschinellen Lernen ein statistisches Modell auf, welches auf Trainingsdaten beruht, die insbesondere während der Lern- oder Beobachtungsphase generiert werden. Die Trainingsdaten können nach Beendigung der Lern- oder Beobachtungsphase vorzugsweise kontinuierlich gegen neue Daten (Testdaten) getestet werden.

Mit anderen Worten, gemäß Ausführungsformen der vorliegenden Erfindung lernt die Auswerteeinrichtung der Spülmaschine nicht einfach die während der Lern- oder Beobachtungsphase gewonnen Beispiele auswendig, sondern erkennt vorzugsweise Muster und Gesetzmäßigkeiten in den Lerndaten.

Dies ermöglicht es, dass nach einem gewissen Einlernvorgang während der Lern- oder Beobachtungsphase die erfindungsgemäße Spülmaschine optimal an die jeweilige Anwendung bzw. an das jeweilige Nutzungsverhalten des Benutzers angepasst oder anpassbar ist. Insbesondere ist die Auswerteeinrichtung oder eine entsprechende Steuereinrichtung der Spülmaschine ausgebildet, vorzugsweise kontinuierlich das Wasch-/Spülverhalten des der Spülmaschine zugeordneten Spülpersonals oder des Betreibers der Spülmaschine zu analysieren, um als Reaktion hiervon entweder Prozessparameter der Spülmaschine automatisch einzustellen, oder um dem Spülpersonal oder dem Betreiber der Spülmaschine Empfehlungen für einen möglichst effizienten Betrieb der Spülmaschine zu geben.

Die erfindungsgemäße Spülmaschine ist somit ausgebildet, anhand der mit dem Kamerasystem aufgenommenen Bilder ein das zeitliche Nutzungsverhalten des Betreibers der Spülmaschine betreffendes Gesamtbild bzw. Muster zu erstellen. In diesem Zusammenhang bietet es sich an, dass die Auswerteeinrichtung der Spülmaschine ferner ausgebildet ist, in Abhängigkeit von dem erstellten, das zeitliche Nutzungsverhalten des Betreibers der Spülmaschine betreffende Gesamtbild bzw. Muster eine Statistik und/oder eine entsprechende Meldung zu generieren und an insbesondere den Betreiber der Spülmaschine auszugeben, wobei die Meldung vorzugsweise eine Empfehlung für einen insbesondere im Hinblick auf die Reinigungseffizienz und im Hinblick auf eine Einsparung von Ressourcen optimierten Betrieb der Spülmaschine enthält.

Gemäß Ausführungsformen der erfindungsgemäßen Spülmaschine ist diese somit ausgebildet, während einer Lern- oder Beobachtungsphase über mindestens einen Beobachtungszeitraum, der vorzugsweise eine Spülschicht der Spülmaschine, einen Spültag der Spülmaschine, eine Spülwoche der Spülmaschine oder einen Zeitabschnitt hiervon betrifft, das zeitliche Nutzungsverhalten des Betreibers der Spülmaschine zu erfassen und dann proaktiv und insbesondere prädiktiv, das heißt vorab, die Behandlungsparameter der Spülmaschine einzustellen. Insbesondere ist es in diesem Zusammenhang somit denkbar, dass die Spülmaschine eine Steuereinrichtung aufweist, welche ausgebildet ist, während des Betriebs der Spülmaschine in einer Spülschicht, in einem Spültag oder in einer Spülwoche vorzugsweise automatisch und noch bevorzugter wahlweise automatisch mindestens einen insbesondere vorab festgelegten Behandlungsparameter, nach welchem das Spülgut beim Waschen, Klarspülen und/oder optionalen Trocknen zu behandeln ist, in Abhängigkeit von dem erstellten Gesamtbild bzw. Muster proaktiv und insbesondere prädiktiv einzustellen und/oder insbesondere zeitlich zu variieren.

So ist es beispielsweise denkbar, dass mit Hilfe der Auswerteeinrichtung der Spülmaschine "erkannt" wird, dass zu Beginn eines Spültags nur verhältnismäßig wenig Spülgut pro Zeiteinheit anfällt. Die der Spülmaschine zugehörige Steuereinrichtung reagiert entsprechend, und zwar indem - beispielsweise bei einer Transportspülmaschine - für diese Zeitperiode (Beginn eines Spültags) die Transportgeschwindigkeit einer zur Transportspülmaschine gehörenden Transportvorrichtung reduziert wird.

Als weiteres Beispiel sei genannt, dass mit Hilfe der Auswerteeinrichtung während der Lern- oder Beobachtungsphase ermittelt wird, dass beispielsweise während der Mittagszeit hauptsächlich Teller, Besteck und Tabletts als zu behandelndes Spülgut anfällt. Die Steuereinrichtung nutzt dieses "Wissen" aus und stellt proaktiv und vorzugsweise prädiktiv grundsätzlich für die Mittagszeit die Behandlungsparameter der Spülmaschine entsprechend ein, um ein optimales Reinigungsergebnis einerseits und eine - im Hinblick auf den Ressourcenverbrauch - effiziente Behandlung des Spülguts zu bewirken.

Der mindestens eine Behandlungsparameter, der in Abhängigkeit von dem erstellten Gesamtbild bzw. Muster, welches das zeitliche Nutzungsverhalten des Betreibers der Spülmaschine betrifft, proaktiv und insbesondere prädiktiv einstellbar und/oder zeitlich variierbar ist, ist vorzugsweise aus folgender Gruppe ausgewählt:
- eine Temperatur einer Waschflüssigkeit, die zum Waschen des Spülguts auf das Spülgut versprüht wird;
- eine pro Zeiteinheit beim Waschen des Spülguts auf das Spülgut versprühte Menge an Waschflüssigkeit;
- ein Düsendruck der beim Waschen des Spülguts auf das Spülgut versprühten Waschflüssigkeit;
- eine Reinigerkonzentration der beim Waschen des Spülguts auf das Spülgut versprühten Waschflüssigkeit;
- eine Zeitdauer eines Waschvorgangs;
- eine Temperatur einer Klarspülflüssigkeit, die zum Klarspülen des Spülguts auf das Spülgut versprüht wird;
- eine pro Zeiteinheit beim Klarspülen des Spülguts auf das Spülgut versprühte Menge an Klarspülflüssigkeit;
- ein Düsendruck der beim Klarspülen des Spülguts auf das Spülgut versprühten Klarspülflüssigkeit;
- eine Klarspülerkonzentration der beim Klarspülen des Spülguts auf das Spülgut versprühten Klarspülflüssigkeit;
- eine Zeitdauer eines Klarspülvorgangs;
- eine Temperatur einer Trocknungsluft, die zum optionalen Trocknen des Spülguts auf das Spülgut geblasen wird;
- eine pro Zeiteinheit beim optionalen Trocknen des Spülguts auf das Spülgut geblasene Menge an Trocknungsluft;
- ein Druck, mit welchem beim optionalen Trocknen des Spülguts Trocknungsluft auf das Spülgut geblasen wird; und/oder
- eine Zeitdauer eines optionalen Trocknungsvorgangs.

Gemäß Realisierungen der erfindungsgemäßen Spülmaschine ist vorgesehen, dass zum Erstellen des das zeitliche Nutzungsverhalten des Betreibers der Spülmaschine betreffende Gesamtbilds die Auswerteeinrichtung der Spülmaschine ausgebildet ist, insbesondere während einer Lern- oder Beobachtungsphase über mindestens einen Beobachtungszeitraum und vorzugsweise über mehrere Beobachtungszeiträume, die jeweils vorzugsweise eine Spülschicht der Spülmaschine, einen Spültag der Spülmaschine, eine Spülwoche der Spülmaschine oder einen Zeitabschnitt hiervon betreffen, eine zeitliche Entwicklung eines insbesondere mittleren Beladungsgrads der Spülmaschine mit Spülgut zu ermitteln.

Alternativ oder zusätzlich hierzu ist es denkbar, dass die Auswerteeinrichtung ausgebildet ist, eine zeitliche Entwicklung einer insbesondere mittleren Beladung der Spülmaschine mit Spülgut mit mindestens einer vorab festgelegten oder festlegbaren Spülgutklasse zu ermitteln.

Weiter alternativ oder zusätzlich hierzu ist es denkbar, dass die Auswerteeinrichtung ausgebildet ist, eine zeitliche Entwicklung eines insbesondere mittleren Verschmutzungsgrads des in der Spülmaschine zu behandelnden Spülguts zu ermitteln.

Als weitere Alternative ist es denkbar, dass die Auswerteeinrichtung ausgebildet ist, eine zeitliche Entwicklung einer insbesondere mittleren Verschmutzungsart des in der Spülmaschine zu behandelnden Spülguts zu ermitteln.

Vorzugsweise ist die Auswerteeinrichtung ferner ausgebildet, anhand der ermittelten zeitlichen Entwicklung des insbesondere mittleren Beladungsgrads der Spülmaschine mit Spülgut, anhand der zeitlichen Entwicklung der insbesondere mittleren Beladung der Spülmaschine mit Spülgut mit der mindestens einen vorab festgelegten oder festlegbaren Spülgutklasse, anhand der ermittelten zeitlichen Entwicklung des insbesondere mittleren Verschmutzungsgrads des in der Spülmaschine zu behandelnden Spülguts und/oder anhand der ermittelten zeitlichen Entwicklung der insbesondere mittleren Verschmutzungsart des in der Spülmaschine zu behandelnden Spülguts ein Muster oder eine Gesetzmäßigkeit abzuleiten.

Das Muster bzw. diese Gesetzmäßigkeit dient anschließend dazu, mit Hilfe der der Spülmaschine zugeordneten Steuereinrichtung proaktiv und insbesondere prädiktiv optimale Behandlungsparameter einzustellen.

Gemäß Ausführungsvarianten ist die Auswerteeinrichtung der erfindungsgemäßen Spülmaschine ausgebildet, die von dem Kamerasystem aufgenommenen Bilder auszuwerten und zu ermitteln, ob zum Zeitpunkt der entsprechenden Bildaufnahme in dem entsprechenden Bild Spülgut mindestens einer der folgenden Spülgutklassen vorhanden war:
- Besteck oder Besteckteile;
- Töpfe, Pfannen oder GN-Behälter;
- Gläser, insbesondere Trinkgläser;
- Tabletts oder tablettartige Gegenstände;
- Teller, Tassen oder Schalen;
- Utensilien;
- sonstiges Spülgut;
- gemischtes Spülgut; und/oder
- Spülgut aus Kunststoff.

In diesem Zusammenhang ist es insbesondere denkbar, dass die Auswerteeinrichtung ausgebildet ist, insbesondere während der Lern- oder Beobachtungsphase über den mindestens einen Beobachtungszeitraum eine zeitliche Entwicklung eines vorzugsweise mittleren Verschmutzungsgrads des Spülguts, welches zum Zeitpunkt der entsprechenden Bildaufnahme in dem Bildaufnahmebereich des Kamerasystems vorhanden war, und/oder eine zeitliche Entwicklung einer vorzugsweise mittleren Verschmutzungsart des Spülguts, welches zum Zeitpunkt der entsprechenden Bildaufnahme in dem Bildaufnahmebereich des Kamerasystems vorhanden war, zu ermitteln, wobei die Spülmaschine eine Steuereinrichtung aufweist, welche ausgebildet ist, vorzugsweise automatisch und noch bevorzugter wahlweise automatisch in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv mindestens eine die Güte einer von dem Waschsystem zu versprühenden Waschflüssigkeit beeinfließende Maßnahme und/oder proaktiv und insbesondere prädiktiv mindestens eine die Reinigungsleistung der Spülmaschine beeinfließende Maßnahme zu initiieren.

In diesem Zusammenhang bietet es sich an, dass die Steuereinrichtung ausgebildet ist, zum Einstellen oder Anpassen der Reinigungsleistung der Spülmaschine in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine Volumenstrommenge und/oder einen Düsendruck und/oder eine Temperatur der von dem Waschsystem zu versprühenden Waschflüssigkeit einzustellen.

Alternativ oder zusätzlich hierzu ist es denkbar, dass die Steuereinrichtung ausgebildet ist, zum Einstellen oder Anpassen der Reinigungsleistung der Spülmaschine in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine Reinigerkonzentration der in der von dem Wachsystem zu versprühenden Waschflüssigkeit einzustellen.

Alternativ oder zusätzlich hierzu ist es denkbar, dass die Steuereinrichtung ausgebildet ist, zum Einstellen oder Anpassen der Reinigungsleistung der Spülmaschine in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine Zeitdauer eines Waschvorgangs und/oder eine Zeitdauer eines Klarspülvorgangs einzustellen.

Alternativ oder zusätzlich hierzu ist es denkbar, dass die Steuereinrichtung ausgebildet ist, zum Einstellen oder Anpassen der Reinigungsleistung der Spülmaschine in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine von dem Klarspülsystem eingebrachte Frischwassernachspülmenge einzustellen.

Alternativ oder zusätzlich hierzu ist es denkbar, dass die Steuereinrichtung ausgebildet ist, zum Einstellen oder Anpassen der Reinigungsleistung der Spülmaschine in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine separate Waschtankregenerationsmenge einzustellen.

Alternativ oder zusätzlich hierzu ist es denkbar, dass die Steuereinrichtung ausgebildet ist, zum Einstellen oder Anpassen der Reinigungsleistung der Spülmaschine in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine separate und insbesondere zusätzliche Maschineneinrichtungen, insbesondere ein Reiniger-Direktsprühsystem, einzustellen und/oder zu aktivieren.

Alternativ oder zusätzlich hierzu ist es denkbar, dass die Steuereinrichtung ausgebildet ist, zum Einstellen oder Anpassen der Reinigungsleistung der Spülmaschine in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv ein zusätzliches Vorabräum- oder Waschmodul zur Behandlung von besonders stark verschmutztem Spülgut zu aktivieren.

Gemäß Realisierungen der erfindungsgemäßen Spülmaschine ist die Steuereinrichtung ausgebildet, vorzugsweise automatisch und noch bevorzugter wahlweise automatisch in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv die von dem mindestens einen Waschsystem zu versprühende Waschflüssigkeit zu regenerieren, und zwar indem vorzugsweise in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine pro Zeiteinheit der zu versprühenden Waschflüssigkeit zuzuführende Regenerationswassermenge insbesondere regelnd eingestellt wird.

Alternativ oder zusätzlich hierzu ist gemäß Realisierungen der erfindungsgemäßen Spülmaschine die Steuereinrichtung ausgebildet, vorzugsweise automatisch und noch bevorzugter wahlweise automatisch in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv das Schmutztragevermögen der von dem mindestens einen Waschsystem zu versprühenden Waschflüssigkeit einzustellen oder zumindest an die ermittelte zeitliche Entwicklung des insbesondere mittleren Verschmutzungsgrads und/oder an die ermittelte zeitliche Entwicklung der insbesondere mittleren Verschmutzungsart des Spülguts anzupassen.

In vorteilhafter Weise ist die Steuereinrichtung ausgebildet, zum Einstellen oder Anpassen des Schmutztragevermögens der von dem mindestens einen Waschsystem zu versprühenden Waschflüssigkeit proaktiv und insbesondere prädiktiv eine Temperatur der Waschflüssigkeit und/oder eine Reinigerkonzentration der Waschflüssigkeit insbesondere regelnd einzustellen.

Gemäß Ausführungsvarianten der erfindungsgemäßen Spülmaschine ist die Steuereinrichtung ferner ausgebildet ist, den Behandlungszeitraum, der vorzugsweise eine Spülschicht, einen Spültag oder eine Spülwoche der Spülmaschine oder einen Zeitabschnitt hiervon betrifft, in einen ersten Unterzeitraum und in mindestens einen weiteren, zweiten Unterzeitraum einzuteilen, wobei:
- in dem ersten Unterzeitraum des Beobachtungszeitraums ein ermittelter, insbesondere mittlerer Beladungsgrad der Spülmaschine mit Spülgut einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Spülmaschine mit Spülgut einem zweiten relativen Wert entspricht oder in einen zweiten relativen Wertebereich fällt, wobei der erste relative Wert des insbesondere mittleren Beladungsgrads der Spülmaschine mit Spülgut einer Beladung der Spülmaschine mit Spülgut entspricht, die vorzugsweise größer ist als die Beladung der Spülmaschine mit Spülgut, die dem zweiten relativen Wert des insbesondere mittleren Beladungsgrads der Spülmaschine mit Spülgut entspricht; und/oder
- in dem ersten Unterzeitraum des Beobachtungszeitraums ein ermittelter, insbesondere mittlerer Beladungsgrad der Spülmaschine mit mindestens einer vorab festgelegten oder festlegbaren Spülgutklasse einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Spülmaschine mit der mindestens einen vorab festgelegten oder festlegbaren Spülgutklasse einem zweiten relativen Wert entspricht oder in einen zweiten relativen Wertebereich fällt, wobei der erste relative Wert des insbesondere mittleren Beladungsgrads der Spülmaschine mit der mindestens einen Spülgutklasse einer Beladung der Spülmaschine mit der mindestens einen Spülgutklasse entspricht, die vorzugsweise größer ist als die Beladung der Spülmaschine mit der mindestens einen Spülgutklasse, die dem zweiten relativen Wert des insbesondere mittleren Beladungsgrads der Spülmaschine mit der mindestens einen Spülgutklasse entspricht; und/oder
- in dem ersten Unterzeitraum des Beobachtungszeitraums ein ermittelter, insbesondere mittlerer Verschmutzungsgrad des in der Spülmaschine zu behandelnden Spülguts einem ersten relativen Wert entspricht oder in einen ersten relativen Wertebereich fällt, und wobei in dem mindestens einen zweiten Unterzeitraum des Beobachtungszeitraums der ermittelter, insbesondere mittlerer Verschmutzungsgrad des in der Spülmaschine zu behandelnden Spülguts einem zweiten relativen Wert entspricht oder in einen zweiten relativen Wertebereich fällt, wobei der erste relative Wert des insbesondere mittleren Verschmutzungsgrads des Spülguts einem Schmutzeintrag in die Spülmaschine entspricht, der vorzugsweise größer ist als ein Schmutzeintrag in die Spülmaschine (1), der dem zweiten relativen Wert des insbesondere mittleren Verschmutzungsgrad des Spülguts entspricht; und/oder
- in dem ersten Unterzeitraum des Beobachtungszeitraums eine ermittelte, insbesondere mittlere Verschmutzungsart des in der Spülmaschine zu behandelnden Spülguts einem ersten relativen Wert entspricht oder in einen ersten relativen Wertebereich fällt, und wobei in dem mindestens einen zweiten Unterzeitraum des Beobachtungszeitraums die ermittelte, insbesondere mittlere Verschmutzungsart des in der Spülmaschine zu behandelnden Spülguts einem zweiten relativen Wert entspricht oder in einen zweiten relativen Wertebereich fällt, wobei der erste relative Wert der insbesondere mittleren Verschmutzungsart des Spülguts einer Verschmutzungsart des Spülguts entspricht, die verschieden von der insbesondere mittleren Verschmutzungsart des Spülguts ist, die dem zweiten relativen Wert der insbesondere mittleren Verschmutzungsart des Spülguts entspricht.

Insbesondere in diesem Zusammenhang bietet es sich an, dass die Steuereinrichtung ferner ausgebildet ist, insbesondere nach Beendigung der Lern- oder Beobachtungsphase vorzugsweise automatisch und noch bevorzugter wahlweise automatisch während des Betriebs der Spülmaschine in einer Spülschicht, in einem Spültag oder in einer Spülwoche für den ersten Unterzeitraum mindestens einen ersten, insbesondere vorab festgelegten Behandlungsparameter, nach welchem das Spülgut während des ersten Unterzeitraums beim Waschen, Klarspülen und/ oder optionalen Trocknen zu behandeln ist, proaktiv auszuwählen und vorzugsweise prädiktiv entsprechend einzustellen, und für den mindestens einen zweiten Unterzeitraum mindestens einen zweiten, insbesondere vorab festgelegten Behandlungsparameter, nach welchem das Spülgut während des mindestens einen zweiten Unterzeitraums beim Waschen, Klarspülen und/oder optionalen Trocknen zu behandeln ist, proaktiv auszuwählen und vorzugsweise prädiktiv einzustellen.

Alternativ oder zusätzlich hierzu kann der erste Unterzeitraum mindestens ein erstes Zeitfenster eines Spültags, einer Spülschicht oder einer Spülwoche der Spülmaschine sein, wobei der zweite Unterzeitraum mindestens ein von dem ersten Zeitfenster verschiedenes, zweites Zeitfenster eines Spültags, einer Spülschicht oder einer Spülwoche der Spülmaschine ist.

Alternativ kann der erste Unterzeitraum mindestens ein erster Wochentag, und wobei der zweite Unterzeitraum mindestens ein von dem ersten Wochentag verschiedener zweiter Wochentag sein.

Gemäß Ausführungsvarianten der erfindungsgemäßen Spülmaschine ist die Auswerteeinrichtung ausgebildet ist, eine benutzerspezifische Verwendung der Spülmaschine insbesondere über einen vorab festgelegten oder festlegbaren Zeitraum, der insbesondere einer Lern- oder Beobachtungsphase entspricht, zu ermitteln, und wobei die Auswerteeinrichtung ferner ausgebildet ist, anhand der ermittelten benutzerspezifischen Verwendung der Spülmaschine insbesondere über den vorab festgelegten oder festlegbaren Zeitraum:
- mindestens eine erste Zeitperiode während mindestens eines Spültags, einer Spülschicht oder einer Spülwoche der Spülmaschine zu ermitteln, in welchen von der Spülmaschine pro Zeiteinheit nur eine relativ geringe Anzahl an Spülgutteilen zu behandeln ist, und mindestens eine zweite Zeitperiode während mindestens eines Spültags, einer Spülschicht oder einer Spülwoche der Spülmaschine zu ermitteln, in welchen von der Spülmaschine pro Zeiteinheit eine relativ hohe Anzahl an Spülgutteilen zu behandeln ist, und für diese Zeitperioden an die pro Zeiteinheit zu behandelnde Anzahl an Spülgutteilen angepasste Behandlungsparameter vorzugsweise automatisch und noch bevorzugter wahlweise automatisch proaktiv und insbesondere prädiktiv einzustellen; und/oder
- Zeitperioden während mindestens eines Spültags, einer Spülschicht oder einer Spülwoche der Spülmaschine zu ermitteln, in welchen, von der Spülmaschine mindestens eine bestimmte Spülgutklasse zumindest überwiegend zu behandeln ist, und für diese Zeitperioden an die mindestens eine bestimmte Spülgutklasse angepasste Behandlungsparameter vorzugsweise automatisch und noch bevorzugter wahlweise automatisch proaktiv und insbesondere prädiktiv einzustellen; und/oder
- Zeitperioden während mindestens eines Spültags, einer Spülschicht oder einer Spülwoche der Spülmaschine zu ermitteln, in welchen, von der Spülmaschine zumindest überwiegend stark verschmutztes Spülgut zu behandeln ist, und für diese Zeitperioden an den Verschmutzungsgrad und/oder an die Verschmutzungsart des Spülguts angepasste Behandlungsparameter vorzugsweise automatisch und noch bevorzugter wahlweise automatisch proaktiv und insbesondere prädiktiv einzustellen; und/oder
- Zeitperioden während mindestens eines Spültags, einer Spülschicht oder einer Spülwoche der Spülmaschine zu ermitteln, in welchen, von der Spülmaschine zumindest überwiegend nur leicht verschmutztes Spülgut zu behandeln ist, und für diese Zeitperioden an den Verschmutzungsgrad und/oder an die Verschmutzungsart des Spülguts angepasste Behandlungsparameter vorzugsweise automatisch und noch bevorzugter wahlweise automatisch proaktiv und insbesondere prädiktiv einzustellen.

Gemäß einem weiteren Aspekt betrifft die vorliegende Erfindung insbesondere eine Spülmaschine mit mindestens einem Waschsystem zum Waschen von Spülgut, mit mindestens einem Klarspülsystem zum Klarspülen des gewaschenen Spülguts und optional mit einem Trocknungssystem zum optionalen Trocknen des klargespülten Spülguts. Die Spülmaschine ist insbesondere eine gewerbliche Spülmaschine, insbesondere eine gewerbliche Geschirr- oder Utensilienspülmaschine, welche als Transportspülmaschine oder als Programmautomat ausgebildet ist.

Die erfindungsgemäße Spülmaschine gemäß diesem Aspekt weist ein optisches Erfassungssystem, insbesondere ein Kamerasystem, auf, welches ausgebildet ist, vorzugsweise kontinuierlich oder zu vorab festgelegten oder festlegbaren Zeiten und/oder Ereignissen mindestens ein Bild von dem in der Spülmaschine zu behandelnden Spülgut oder von dem in der Spülmaschine behandelten Spülgut aufzunehmen. Ferner ist eine Auswerteeinrichtung vorgesehen, welche ausgebildet ist, das mindestens eine Bild auszuwerten und zu ermitteln, ob zum Zeitpunkt der Bildaufnahme in dem mindestens einen Bild Spülgut von bestimmten Spülgutklassen vorhanden war.

Bei den Spülgutklassen, die mit Hilfe der Auswerteeinrichtung anhand des mindestens einen Bilds identifiziert werden, handelt es sich insbesondere um mindestens eine der folgenden Spülgutklassen:
▪ Besteck oder Besteckteile;
▪ Töpfe, Pfannen oder GN-Behälter;
▪ Gläser, insbesondere Trinkgläser;
▪ Tabletts oder tablettartige Gegenstände;
▪ Teller, Tasse oder Schale;
▪ Utensilien, insbesondere Kochutensilien;
▪ sonstiges Spülgut;
▪ gemischtes Spülgut; und/oder
▪ Spülgut aus Kunststoff.

Die Aufzählung der möglichen Spülgutklassen ist keinesfalls als abschließend anzusehen.

Alternativ oder zusätzlich hierzu ist es insbesondere denkbar, dass die Auswerteeinrichtung ausgebildet ist, beim Auswerten des mindestens einen Bilds zu ermitteln, ob zum Zeitpunkt der Bildaufnahme in dem mindestens einen Bild Spülgut mindestens eine der folgenden Spülgutklasse vorhanden war:
▪ aus Porzellan oder einem porzellanartigen Material gefertigte Teller;
▪ aus Porzellan oder einem porzellanartigen Material, Glas oder einem glasartigen Material gefertigte Tassen;
▪ aus Porzellan oder einem porzellanartigen Material, Glas oder einem glasartigen Material gefertigte Schalen;
▪ aus einem Kunststoffmaterial gefertigte Tabletts oder tablettartige Gegenstände;
▪ aus einem Kunststoffmaterial gefertigte Mehrwegbehälter oder Mehrweggeschirr;
▪ aus einem Metall, insbesondere aus Edelstahl gefertigte Behälter, insbesondere GN-Behälter;
▪ aus einem Metall, insbesondere aus Edelstahl gefertigte Töpfe;
▪ aus einem Metall, insbesondere aus Edelstahl gefertigte Pfannen;
▪ aus einem Metall, insbesondere aus Edelstahl gefertigte Bestecke oder Besteckteile; und/oder
▪ aus Glas oder einem glasartigen Material gefertigte Trinkgläser.

Auch diese Aufzählung der möglichen Spülgutklassen ist keinesfalls als abschließend anzusehen.

Das Ermitteln der in der Spülmaschine behandelten oder zu behandelnden Spülgutklassen beruht auf der Erkenntnis, dass die für eine wirkungsvolle Behandlung bzw. Reinigung auszuwählenden Prozessparameter für das Waschsystem, das Klarspülsystem und/oder für das optionale Trocknungssystem von der Art bzw. Klasse des zu behandelnden Spülguts abhängen. Die unterschiedlichen Spülgutklassen verlangen dabei geeignete Behandlungsprogramme oder Behandlungsparameter, nach welchen das Spülgut beispielsweise mit dem Waschsystem und/oder mit dem Klarspülsystem und/oder mit dem optional vorgesehenen Trocknungssystem zu behandeln ist.

Die Behandlungsprogramme oder Behandlungsparameter sind insbesondere unter dem Gesichtspunkt einer pro Zeiteinheit von dem Waschsystem zu versprühenden Volumenstrommenge an Waschflüssigkeit und unter dem Gesichtspunkt eines Düsendrucks, mit welchem die Waschflüssigkeit von dem Waschsystem versprüht wird, abgestimmt. So erfordern beispielsweise leicht verschmutzte Spülgutteile, wie etwa Tabletts oder Trinkgläser, im Unterschied zu stark verschmutzten Spülgutteilen mit eingebrannten, schwer zu entfernenden Essensrückständen, wie zum Beispiel Kochutensilien, Warmhaltebehälter, Backformen, etc., nur eine verhältnismäßig geringe pro Zeiteinheit von dem Waschsystem versprühte Volumenstrommenge an Waschflüssigkeit und nur einen verhältnismäßig geringen Düsendruck zum Versprühen der Waschflüssigkeit von dem Waschsystem.

Andererseits verlangen die unterschiedlichen Spülgutklassen auch unter dem Gesichtspunkt einer pro Zeiteinheit von dem Klarspülsystem zu versprühenden Volumensprungmenge an Klarspülflüssigkeit abgestimmte Behandlungsprogramme, nach welchem das Spülgut von dem Klarspülsystem behandelt wird.

Die erfindungsgemäße Lösung zeichnet sich insbesondere dadurch aus, dass die Spülmaschine ferner eine Steuereinrichtung aufweist, welche ausgebildet ist, insbesondere während einer Lern- oder Beobachtungsphase über mindestens einen Beobachtungszeitraum und vorzugsweise über mehrere Beobachtungszeiträume, die jeweils vorzugsweise eine Spülschicht oder einen Spültag der Spülmaschine oder einen Zeitabschnitt hiervon betreffen, eine zeitliche Entwicklung der Beladung der Spülmaschine mit mindestens einer der zuvor genannten Spülgutklassen zu ermitteln.

Mit anderen Worten, die Steuereinrichtung der Spülmaschine ist ausgebildet, insbesondere während der Lern- oder Beobachtungsphase zu ermitteln, wann innerhalb einer Spülschicht oder während eines Spültags von der Spülmaschine insbesondere welche Spülgutklasse/welche Spülgutklassen zu behandeln ist/sind.

Vorzugsweise ist die Steuereinrichtung ferner ausgebildet, anhand der ermittelten zeitlichen Entwicklung der Beladung der Spülmaschine mit den entsprechenden Spülgutklassen, ein Muster oder eine Gesetzmäßigkeit abzuleiten.

Demgemäß weist die erfindungsgemäße Spülmaschine eine gewisse "Intelligenz" auf, da mit Hilfe der Steuereinrichtung bzw. mit Hilfe der Auswerteeinrichtung künstlich Wissen aus Erfahrung generiert wird. Die Steuereinrichtung lernt aus Beispielen während der Lern- oder Beobachtungsphase und kann diese nach Beendigung der Lernphase verallgemeinern. Dazu bauen Algorithmen der Steuereinrichtung beim maschinellen Lernen ein statistisches Modell auf, welches auf Trainingsdaten beruht, die insbesondere während der Lern- oder Beobachtungsphase generiert werden. Die Trainingsdaten werden nach Beendigung der Lern- oder Beobachtungphase vorzugsweise kontinuierlich gegen neue Daten (Testdaten) getestet.

Mit anderen Worten, gemäß bevorzugten Ausführungsformen der vorliegenden Erfindung lernt die Steuereinrichtung der erfindungsgemäßen Spülmaschine nicht einfach die während der Lern- oder Beobachtungsphase gewonnen Beispiele auswendig, sondern erkennt vorzugsweise Muster und Gesetzmäßigkeiten in den Lerndaten.

Dies ermöglicht es, dass nach einem gewissen Einlernvorgang während der Lern- oder Beobachtungsphase die erfindungsgemäße Spülmaschine optimal an die jeweilige Anwendung bzw. an das jeweilige Nutzungsverhalten des Benutzers angepasst oder anpassbar ist. Insbesondere ist die Steuereinrichtung ausgebildet, vorzugsweise kontinuierlich das Wasch-/Spülverhalten des der Spülmaschine zugeordneten Spülpersonals oder des Betreibers der Spülmaschine zu analysieren, um als Reaktion hiervon entweder Prozessparameter der Spülmaschine automatisch einzustellen, oder um dem Spülpersonal oder dem Betreiber der Spülmaschine Empfehlungen für einen möglichst effizienten Betrieb der Spülmaschine zu geben.

So ist beispielsweise gemäß Realisierungen der erfindungsgemäßen Spülmaschine vorgesehen, dass die Steuereinrichtung ferner ausgebildet ist, den Behandlungszeitraum, der vorzugsweise eine Spülschicht oder einen Spültag der Spülmaschine oder eine Spülwoche der Spülmaschine oder einen Zeitabschnitt hiervon betrifft, in einen ersten Unterzeitraum und den mindestens einen weiteren, zweiten Unterzeitraum einzuteilen. Der erste Unterzeitraum bzw. der mindestens eine weitere, zweite Unterzeitraum kann beispielsweise einen bestimmten Wochentag einer Spülwoche oder eine bestimmte Zeitperiode eines Spültags bzw. einer Spülschicht betreffen.

Die Unterteilung bzw. Einteilung des Behandlungszeitraums, der - wie ausgeführt - beispielsweise eine Spülschicht, einen Spültag oder eine Spülwoche der Spülmaschine betrifft, in die einzelnen Unterzeiträume erfolgt insbesondere in Abhängigkeit von den Spülgutklassen, die hauptsächlich oder überwiegend während der Unterzeiträume des Beobachtungszeitraums von der Spülmaschine zu behandeln sind.

Beispielsweise entspricht in dem ersten Unterzeitraum des Beobachtungszeitraums der ermittelte, insbesondere mittlere Beladungsgrad der Spülmaschine mit mindestens einer der genannten Spülgutklassen einem ersten relativen Wert, während in dem mindestens einen zweiten Unterzeitraum des Beobachtungszeitraums der ermittelte, insbesondere mittlere Beladungsgrad der Spülmaschine mit der mindestens eine Spülgutklasse einem zweiten relativen Wert entspricht.

So ist es beispielsweise denkbar, dass der erste relative Wert des insbesondere mittleren Beladungsgrad der Spülmaschine mit der mindestens einen Spülgutklasse einem Beladungsgrad der Spülmaschine mit dieser mindestens einen Spülgutklasse entspricht, die größer ist als der Beladungsgrad der Spülmaschine mit der mindestens eine Spülgutklasse, die dem zweiten relativen Wert des insbesondere mittleren Beladungsgrads der Spülmaschine mit der mindestens einen Spülgutklasse entspricht.

Mit anderen Worten, beispielsweise entspricht der erste Unterzeitraum einer Zeitperiode am Vormittag eines Spültags, wobei vormittags in der Regel nur wenig mit der Spülmaschine zu behandelndes stark verschmutztes Spülgut anfällt. Denkbar ist beispielsweise, dass in der Regel am Vormittag überwiegend Gläser, insbesondere Trinkgläser zum Behandeln anfallen, nicht jedoch Töpfe, Pfannen oder GN-Behälter. Der zweite Unterzeitraum kann beispielsweise einer Zeitperiode um die Mittagszeit entsprechen, in welcher erfahrungsgemäß deutlich mehr Spülgut und insbesondere deutlich mehr Spülgut mit starken Verschmutzungen anfällt.

Selbstverständlich kommen aber auch andere Zeitfenster oder auch Tage für den ersten und den mindestens einen weiteren, zweiten Unterzeitraum in Frage.

Besonders bevorzugt ist vorgesehen, dass die Steuereinrichtung ferner ausgebildet ist, insbesondere nach Beendigung der Lern- oder Beobachtungsphase vorzugsweise automatisch und noch bevorzugter wahlweise automatisch während des Betriebs der Spülmaschine in einer Spülschicht, in einem Spültag oder in einer Spülwoche für den ersten Unterzeitraum mindestens einen ersten insbesondere vorfestgelegten Behandlungsparameter, nach welchem das Spülgut während des ersten Unterzeitraums beim Waschen, Klarspülen und/oder beim optionalen Trocken zu behandeln ist, auszuwählen und entsprechend einzustellen.

In gleicher Weise bietet es sich an, dass die Steuereinrichtung ferner ausgebildet ist, für den mindestens einen zweiten Unterzeitraum mindestens einen zweiten, insbesondere vorab festgelegten Behandlungsparameter, nach welchem das Spülgut während des mindestens einen zweiten Unterzeitraums beim Waschen, Klarspülen und/oder beim optionalen Trocknen zu behandeln ist, auszuwählen und entsprechend einzustellen ist.

Mit anderen Worten, bei dieser Ausführungsvariante verfügt die erfindungsgemäße Spülmaschine über eine gewisse Intelligenz, da die der Spülmaschine zugeordnete Steuereinrichtung anhand der zuvor ermittelten Lerndaten weiß, zu welchen Zeiträumen während eines Spültags, während einer Spülschicht oder während einer Spülwoche der Spülmaschine überwiegend welche Spülgutart bzw. Spülgutklasse anfällt. Mit dieser Kenntnis kann die Spülmaschine automatisch die Behandlungsparameter der Spülmaschine entsprechend anpassen, ohne dass hierfür ein manueller Eingriff des Spülpersonals notwendig ist.

Beispielsweise kann es sich um den mindestens einen ersten und/oder um den mindestens einen zweiten Behandlungsparameter um mindestens einen der folgenden Behandlungsparameter handelt:
▪ eine Temperatur einer Waschflüssigkeit, die zum Waschen des Spülguts auf das Spülgut versprüht wird;
▪ eine pro Zeiteinheit beim Waschen des Spülguts auf das Spülgut versprühten Menge an Waschflüssigkeit;
▪ ein Düsendruck der beim Waschen des Spülguts auf das Spülgut versprühten Waschflüssigkeit;
▪ eine Reinigerkonzentration der beim Waschen des Spülguts auf das Spülgut versprühten Waschflüssigkeit;
▪ eine Zeitdauer des Waschvorgangs;
▪ eine Temperatur einer Klarspülflüssigkeit, die zum Klarspülen des Spülguts auf das Spülgut versprüht wird;
▪ eine pro Zeiteinheit beim Klarspülen des Spülguts auf das Spülgut versprühte Menge an Klarspülflüssigkeit;
▪ ein Düsendruck der beim Klarspülen des Spülguts auf das Spülgut versprühten Klarspülflüssigkeit;
▪ eine Klarspülerkonzentration der beim Klarspülen des Spülguts auf das Spülgut versprühten Klarspülflüssigkeit;
▪ eine Zeitdauer des Klarspülvorgangs;
▪ eine Temperatur einer Trocknungsluft, die zum optionalen Trocknen des Spülguts auf das Spülgut geblasen wird;
▪ eine pro Zeiteinheit beim optionalen Trocknen des Spülguts auf das Spülgut geblasene Menge an Trocknungsluft;
▪ ein Druck, mit welchem beim optionalen Trocknen des Spülguts Trocknungsluft auf das Spülgut geblasen wird; und/oder
▪ eine Zeitdauer des optionalen Trocknungsvorgangs.

Beispielsweise ist es somit denkbar, dass während einer Zeitperiode, in welcher nur eine geringe Beladung der Spülmaschine mit beispielsweise Töpfen, Pfannen oder GN-Behältern, aber eine relativ hohe Beladung der Spülmaschine mit Tabletts oder tablettartigen Gegenständen und Gläsern, insbesondere Trinkgläsern auftritt bzw. erwartet wird, die Steuereinrichtung automatisch die Temperatur der Waschflüssigkeit reduziert und/oder die pro Zeiteinheit beim Waschen des Spülguts versprühte Menge an Waschflüssigkeit reduziert und/oder den Düsendruck der beim Waschen des Spülguts auf das Spülgut versprühten Waschflüssigkeit reduziert und/oder die Zeitdauer des Waschvorgangs reduziert und/oder die Temperatur der Klarspülflüssigkeit, die zum Klarspülen des Spülguts auf das Spülgut versprüht wird, erhöht und/oder die Zeitdauer des Klarspülvorgangs erhöht.

Selbstverständlich sind aber auch andere Kombinationen der einstellbaren Behandlungsparameter denkbar.

Mit der erfindungsgemäßen Lösung wird vorzugsweise automatisch aber dennoch auf eine einfache und effektive Weise ein "Überwaschen" beispielsweise von nur leicht verschmutzten Spülgutteilen, wie etwa Tabletts oder Trinkgläsern, wirkungsvoll verhindert, so dass während des Reinigungsprozesses derartiger nur leicht verschmutzter Spülgutteile nicht mehr Ressourcen an Energie, Wasser, Chemie, etc. als notwendig eingesetzt werden.

Wie bereits angedeutet, handelt es sich bei dem ersten Unterzeitraum um mindestens ein erstes Zeitfenster eines Spültags, einer Spülschicht oder einer Spülwoche der Spülmaschine, wobei der zweite Unterzeitraum mindestens ein von dem ersten Zeitfenster verschiedenes, zweites Zeitfenster eines Spültags, einer Spülschicht oder einer Spülwoche der Spülmaschine ist.

Alternativ hierzu ist es aber auch denkbar, dass es sich bei dem ersten Unterzeitraum um mindestens einen ersten Wochentag einer Spülwoche der Spülmaschine handelt, wobei der zweite Unterzeitraum mindestens ein von dem ersten Wochentag der Spülwoche verschiedener zweiter Wochentag ist.

Insbesondere ist es somit denkbar, dass die Spülmaschine während der Lern- oder Beobachtungsphase ermittelt, dass beispielsweise jeden Freitag einer Spülwoche nur verhältnismäßig wenig stark verschmutztes Spülgut anfällt, da beispielsweise die Kantine kein Mittagsessen mehr serviert. Für diese Zeitfenster (Spültag Freitag) würde dann automatisch die Spülmaschine andere Behandlungsparameter einstellen als an den verbleibenden Spültagen.

Die Steuereinrichtung ist somit vorzugsweise ausgebildet, anhand einer benutzerspezifischen Verbindung der Spülmaschine über einen vorfestgelegten oder festlegbaren Zeitraum, der insbesondere der Lern- oder Beobachtungsphase entspricht, Zeitperioden während mindestens eines Spültags, während mindestens einer Spülschicht oder während mindestens einer Spülwoche der Spülmaschine zu identifizieren, in welchen von der Spülmaschine mindestens eine bestimmte Spülgutklasse zumindest überwiegend zu behandeln ist, und für diese Zeitperioden an die mindestens eine bestimmte Spülgutklasse angepasste Behandlungsparameter vorzugsweise automatisch und noch bevorzugter wahlweise automatisch einzustellen.

Die Lern- oder Beobachtungsphase, während welcher die Steuereinrichtung über den mindestens einen Beobachtungszeitraum die zeitliche Entwicklung der Beladung der Spülmaschine mit mindestens einer der Spülgutklassen ermittelt, beginnt vorzugsweise bei der Erstinbetriebnahme der Spülmaschine. Alternativ oder zusätzlich hierzu ist es aber denkbar, dass die Lern- oder Beobachtungsphase vorzugsweise manuell zu jedem beliebigen Zeitpunkt initiierbar ist.

Gemäß vorteilhaften Realisierungen der Spülmaschine ist vorgesehen, dass die Steuereinrichtung ferner ausgebildet ist, eine Fehler- oder Warnmeldung insbesondere an das der Spülmaschine zugeordnete Spülpersonal und/oder an den Betreiber der Spülmaschine auszugeben, wenn von der Auswerteeinrichtung ermittelt wird, dass zum Zeitpunkt der Bildaufnahme der ermittelte, insbesondere mittlere Beladungsgrad der Spülmaschine mit der mindestens einen Spülgutklasse von einem während der Lern- oder Beobachtungsphase für diesen Zeitpunkt ermittelten, insbesondere mittleren Beladungsgrad der Spülmaschine mit der mindestens einen Spülgutklasse - insbesondere trotz Berücksichtigung einer insbesondere vorfestgelegten oder festlegbaren Variante - abweicht.

Mit dieser Maßnahme ist somit sichergestellt, dass auch dann, wenn die Verwendung der Spülmaschine von der zuvor erlernten benutzerspezifischen Verwendung abweicht, eine im Hinblick auf die Spülgutklasse geeignete Behandlung des Spülguts umgesetzt wird.

Gemäß Weiterbildungen insbesondere der zuletzt genannten Ausführungsvariante ist vorgesehen, dass die Steuereinrichtung ferner ausgebildet ist, insbesondere während der Lern- oder Beobachtungsphase eine Statistik über die von der Spülmaschine zu behandelnden Spülgutklassen und/oder eine Statistik über den Zeitpunkt der von der Spülmaschine zu behandelnden Spülgutklassen zu erstellen.

Vorzugsweise ist dabei die Steuereinrichtung ferner ausgebildet, in Abhängigkeit von der ermittelten zeitlichen Entwicklung und/oder in Abhängigkeit von der erstellten Statistik eine entsprechende Meldung zu generieren und/oder an insbesondere den Betreiber der Spülmaschine auszugeben. Die Meldung enthält vorzugsweise eine Empfehlung für einen insbesondere im Hinblick auf die Reinigungseffizienz und im Hinblick auf eine Einsparung von Ressourcen optimierten Betrieb der Spülmaschine.

Gemäß Realisierungen der erfindungsgemäßen Spülmaschine ist diese als Transportspülmaschine ausgeführt, wobei das mindestens eine Waschsystem Teil mindestens einer Waschzone der Transportspülmaschine ist. Das mindestens eine Klarspülsystem ist Teil mindestens einer Klarspülzone der Transportspülmaschine und das optionale Trocknungssystem ist Teil mindestens einer Trocknungszone der Transportspülmaschine.

Die Transportspülmaschine weist ferner eine Transportvorrichtung auf, um das zu behandelnde und insbesondere zu reinigende Spülgut durch die mindestens eine Waschzone, die mindestens eine Klarspülzone und die optional vorgesehene mindestens eine Trocknungszone zu transportieren. Das insbesondere als Kamerasystem ausgeführte optische Erfassungssystem ist ausgebildet, vorzugsweise kontinuierlich oder zu vorab festgelegten Zeiten und/oder Ereignissen mindestens ein Bild von einem Bereich der Transportvorrichtung aufzunehmen.

Die Erfindung betrifft ferner ein entsprechendes Verfahren zum Betreiben einer gewerblichen Spülmaschine zum Reinigen von Spülgut. Die Spülmaschine weist mindestens ein Waschsystem zum Waschen des zu behandelnden Spülguts, mindestens ein Klarspülsystem zum Klarspülen des gewaschenen Spülguts und optional mindestens ein Trocknungssystem zum optionalen Trocknen des klargespülten Spülguts auf.

Das erfindungsgemäße Verfahren zeichnet sich insbesondere dadurch aus, dass insbesondere während einer Lern- oder Beobachtungsphase einer der Spülmaschine zugeordneten Steuereinrichtung über mindestens einen Beobachtungszeitraum und vorzugsweise über mehrere Beobachtungszeiträume, die jeweils vorzugsweise eine Spülschicht, einen Spültag oder eine Spülwoche der Spülmaschine oder einen Zeitabschnitt hiervon betreffen, eine zeitliche Entwicklung der Beladung der Spülmaschine mit mindestens einer Spülgutklasse zu ermitteln.

Anhand der ermittelten zeitlichen Entwicklung der unterschiedlichen von der Spülmaschine zu behandelnden Spülgutklassen wird anschließend ein Muster oder eine Gesetzmäßigkeit abgeleitet.

Bei dem erfindungsgemäßen Betriebsverfahren ist vorzugsweise ferner vorgesehen, dass der Beobachtungszeitraum in einen ersten Unterzeitraum, in welchem zumindest überwiegend eine erste Spülgutklasse von der Spülmaschine zu behandeln ist, und in mindestens einen weiteren, zweiten Unterzeitraum eingeteilt wird, in welchem zumindest überwiegend eine oder mehrere von der ersten Spülgutklasse verschiedene Spülgutklassen von der Spülmaschine zu behandeln sind.

Insbesondere nach Beendigung der Lern- oder Beobachtungsphase wird vorzugsweise automatisch und noch bevorzugter wahlweise automatisch für den ersten Unterzeitraum mindestens ein für die Behandlung der ersten Spülgutklasse angepasster oder optimierter Behandlungsparameter eingestellt, nach welchem das Spülgut zu waschen, klarzuspülen und/oder optional zu trocknen ist.

Gemäß Realisierungen des erfindungsgemäßen Betriebsverfahrens ist vorgesehen, dass eine Fehler- oder Warnmeldung insbesondere an das der Spülmaschine zugeordnete Spülpersonal und/oder an den Betreiber der Spülmaschine ausgegeben wird, wenn ermittelt wird, dass ein ermittelter, insbesondere mittlerer Beladungsgrad der Spülmaschine mit mindestens einer Spülgutklasse von einem während der Lern- oder Beobachtungsphase für diesen Zeitpunkt ermittelten, insbesondere mittleren Beladungsgrad der Spülmaschine mit der mindestens einen Spülgutklasse - insbesondere trotz Berücksichtigung einer insbesondere vorab festgelegten oder festlegbaren Varianz - abweicht.

Schließlich ist gemäß einem Aspekt des erfindungsgemäßen Betriebsverfahrens vorgesehen, dass insbesondere während der Lern- oder Beobachtungsphase eine Statistik über die von der Spülmaschine zu behandelnden Spülgutklassen und/ oder eine Statistik über den Zeitpunkt der von der Spülmaschine zu behandelnden Spülgutklasse erstellt wird.

Vorzugsweise kann in Abhängigkeit von der ermittelten zeitlichen Entwicklung und/oder in Abhängigkeit von der erstellten Statistik eine entsprechende Meldung generiert und/oder an insbesondere den Betreiber der Spülmaschine ausgegeben werden. Die Meldung enthält vorzugsweise eine Empfehlung für einen insbesondere im Hinblick auf die Reinigungseffizienz und/oder im Hinblick auf Ressourceneinsparungen optimierten Betrieb der Spülmaschine.

Im Folgenden wird die Erfindung mit Bezug auf die beiliegenden Zeichnungen anhand exemplarischer Ausführungsformen der erfindungsgemäßen Spülmaschine beschrieben.

Es zeigen:
- FIG. 1: schematisch eine Längsschnittansicht einer als Transportspülmaschine ausgeführten Spülmaschine gemäß einer exemplarischen Ausführungsform der Erfindung; und
- FIG. 2: schematisch eine Längsschnittansicht einer als Programmautomat ausgeführten Spülmaschine nach einer exemplarischen Ausführungsform der Erfindung.

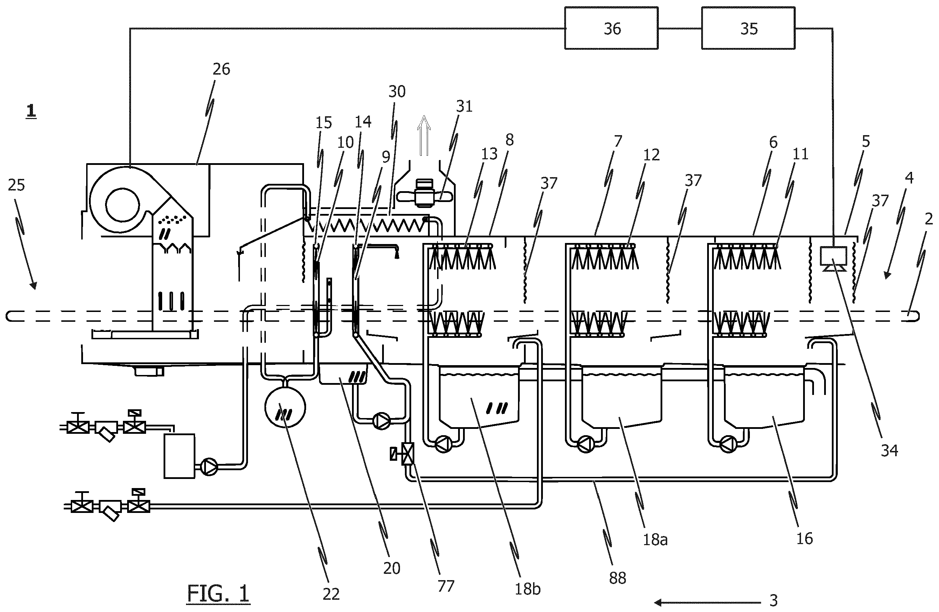

FIG. 1 zeigt eine Transportspülmaschine 1 mit einer Transportvorrichtung 2 zum Transportieren von in den Zeichnungen nicht dargestelltem Spülgut in einer Transportrichtung 3 durch die Transportspülmaschine 1.

Als Transportvorrichtung 2 kommt beispielsweise ein Transportband in Frage, welches bevorzugt als mehrgliedriges Kunststofftransportband ausgebildet ist und durch einen in FIG. 1 nicht dargestellten vorzugsweise elektrischen Antrieb kontinuierlich angetrieben wird, so dass das auf das Transportband 2 aufgebrachte Spülgut durch die verschiedenen Behandlungszonen 6, 7, 8, 9, 10 und 26 der Transportspülmaschine 1 gemäß der Darstellung in FIG. 1 gefördert wird.

Üblicherweise wird das in Transportrichtung 3 transportierte Spülgut im Bereich des Einlaufes 4 auf die Transportvorrichtung bzw. das Transportband 2 aufgebracht. Entsprechend der durch den Pfeil angedeuteten Transportrichtung 3 wird dann das Spülgut vom Einlauf 4 in einen Einlauftunnel 5 transportiert.

Die Transportspülmaschine 1 gemäß der ersten Ausführungsform der vorliegenden Erfindung weist wenigstens eine Waschzone, beispielsweise wie in FIG. 1 dargestellt, eine Vorwaschzone 6, sowie eine erste Hauptwaschzone 7 und eine zweite Hauptwaschzone 8, welche in der Transportrichtung 3 gesehen nach der Vorwaschzone 6 angeordnet sind, auf.

In Transportrichtung 3 gesehen nach der wenigstens einen Waschzone 6, 7, 8 ist bei der in FIG. 1 dargestellten Transportspülmaschine 1 eine Nachwaschzone 9 und eine der Nachwaschzone 9 nachgeschaltete Klarspülzone 10 angeordnet.

In der Darstellung gemäß FIG. 1 ist die Transportvorrichtung 2 als umlaufendes Transportband dargestellt. Als Transportvorrichtung 2 sind allerdings auch Transportkörbe denkbar, in welchen das nicht explizit dargestellte Spülgut eingesetzt wird, und welche auf die Oberseite des Transportbandes aufgesetzt werden.

In Transportrichtung 3 gesehen läuft das entweder unmittelbar auf dem Transportband 2 aufgenommene Spülgut oder durch Körbe gehaltene Spülgut in der Transportrichtung 3 durch den Einlauftunnel 5, die sich daran anschließende Vorwaschzone 6, die erste Hauptwaschzone 7, die zweite Hauptwaschzone 8, die Nachwaschzone 9, die Klarspülzone 10, eine Trocknungszone 26 in eine Auslaufstrecke 25 ein.

Den genannten Behandlungszonen 6, 7, 8, 9 und 10 der Transportspülmaschine 1 sind jeweils Sprühdüsen 11, 12, 13, 14 und 15 zugeordnet, über welche Flüssigkeit auf das Spülgut gesprüht wird, das von der Transportvorrichtung 2 durch die jeweiligen Behandlungszonen 6, 7, 8, 9, und 10 transportiert wird. Jeder Behandlungszone 6, 7, 8, 9 und 10 ist ein Tank 16, 18, 20 und 22 zugeordnet, in welchem versprühte Flüssigkeit aufgenommen wird, und/oder in welchem Flüssigkeit für die Sprühdüsen der betreffenden Zonen bereitgestellt wird. Bei der in FIG. 1 dargestellten Transportspülmaschine 1 wird Klarspülflüssigkeit in Form von Frischwasser, welches rein oder mit weiteren Zusätzen, wie beispielsweise Klarspüler, versetzt sein kann, über die oberhalb und unterhalb des Transportbandes oder seitlich angeordnete Sprühdüsen 15 der Klarspülzone 10 auf das in den Zeichnungen nicht dargestellte Spülgut gesprüht.

Ein Teil der versprühten Klarspülflüssigkeit wird über ein Kaskadensystem entgegen der Transportrichtung 3 des Spülguts von Zone zu Zone transportiert. Der restliche Teil wird über ein Ventil 77 und eine Bypassleitung 88 direkt in den Vorwaschtank 16 geleitet.

Die versprühte Klarspülflüssigkeit wird in dem Tank 20 (Nachwaschtank 20) der Nachwaschzone 9 aufgefangen, von welchem sie über ein Pumpensystem zu den Sprühdüsen 14 (Nachwaschdüsen 14) der Nachwaschzone 9 gefördert wird. In der Nachwaschzone 9 wird Waschflüssigkeit von dem Spülgut abgespült. Die hierbei anfallende Flüssigkeit fließt in den Waschtank 18b der zweiten Hauptwaschzone 8, wird üblicherweise mit einem Reiniger versehen und durch ein Pumpensystem über die Düsen 13 (Waschdüsen 13) der zweiten Hauptwaschzone 8 auf das Spülgut gesprüht.

Von dem Waschtank 18b der zweiten Hauptwaschzone 8 fließt die Flüssigkeit in den Waschtank 18a der ersten Hauptwaschzone 7. Von dort aus wird die Flüssigkeit über ein weiteres Pumpensystem über die Waschdüsen 12 der ersten Hauptwaschzone 7 erneut auf das Spülgut gesprüht. Von dem Waschtank 18a der ersten Hauptwaschzone 7 fließt anschließend die Flüssigkeit in den Vorwaschtank 16 der Vorwaschzone 6. Die Flüssigkeit in dem Vorwaschtank 16 wird über ein Pumpensystem über die Vorwaschdüsen 11 der Vorwaschzone 6 auf das Spülgut gesprüht, um grobe Verunreinigungen von dem Spülgut zu entfernen.

Die einzelnen Spülsysteme der Behandlungszonen 6, 7, 8, 9 und 10 gewährleisten, dass das Spülgut sowohl von der Oberseite als auch der Unterseite abgespritzt wird.

Die jeweiligen Zonen 6, 7, 8, 9 und 10 der Transportspülmaschine 1 können über Trennvorhänge 37 voneinander getrennt sein. Bei der in FIG. 1 dargestellten Ausführungsform ist auch der Einlauftunnel 5 selber über einen Trennvorhang 37 von dem Einlauf 4 getrennt. Durch das Vorsehen der Trennvorhänge 37 wird ein Überspritzen von Waschflüssigkeit und Klarspülflüssigkeit und der Austritt von Wrasen aus der Transportspülmaschine verhindert.

An die Klarspülzone 10 schließt sich in Transportrichtung 3 des Spülguts die bereits erwähnte Trocknungszone 26 an. In der Trocknungszone 26 wird das Spülgut mit trockener und erwärmter Luft getrocknet, um die auf dem Spülgut befindliche Feuchtigkeit abzublasen bzw. abzutrocknen. Um den Feuchtigkeitsgehalt der Luft in einem für die Trocknung günstigen Bereich zu halten, ist es beispielsweise denkbar, über eine Öffnung, beispielsweise durch die Austrittsöffnung für das Spülgut, Raumluft zuzuführen. Die warme und angefeuchtete Luft wird beispielsweise mit Hilfe eines Gebläses 31 über eine weitere Öffnung aus der Trocknungszone 26 abgezogen.

Dabei ist vorteilhaft, dass der Abluftstrom aus der Trocknungszone 26 eine Einrichtung zur Wärmerückgewinnung 30 passiert, in welcher ein Kondensator vorgesehen sein kann. Die Einrichtung zur Wärmerückgewinnung 30 dient dazu, zumindest einen Teil der in der Abluft enthaltenen Wärmeenergie zurückzugewinnen.

Bei heutigen Band-/Korbtransportspülmaschinen wird das Spülgut durch mehrere Behandlungszonen, wie beispielsweise Vorwaschzonen, Hauptwaschzonen, Nachwaschzonen, Klarspülzonen und Trocknungszonen, befördert.

Wie bereits angedeutet, verlangen unterschiedliche Spülgutarten in den Behandlungszonen der Transportspülmaschine unterschiedliche Behandlungsparameter. Bei den derzeit bekannten Transportspülmaschinen erfolgt jedoch keine automatische Differenzierung der zu behandelnden Spülgutarten, so dass die herkömmlichen Systeme üblicherweise derart als Kompromiss ausgelegt werden, dass sie mehr oder weniger effizient für mehrere Spülgutarten verwendbar sind. Dieser Ansatz führt dazu, dass zur Behandlung des Spülguts in der Regel wesentlich mehr Ressourcen (Energie, Wasser, Chemie, etc.) eingesetzt werden, als dies tatsächlich notwendig wäre.

Die erfindungsgemäße Transportspülmaschine 1, wie sie beispielsweise in FIG. 1 dargestellt ist, ist dadurch gekennzeichnet, dass die Transportspülmaschine 1 ein Kamerasystem 34 aufweist, welches oberhalb der Transportvorrichtung 2 angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung 2 aufzunehmen.

Dem Kamerasystem 34 ist eine Bildverarbeitungseinrichtung 35 zugeordnet, welche ausgebildet ist zur insbesondere optionalen Vorverarbeitung des von dem Kamerasystem 34 aufgenommenen mindestens einen Bilds, zur Segmentierung des insbesondere optional vorbearbeiteten Bilds und zur Merkmalsextraktion und Klassifizierung von in dem Bild enthaltenen Objekten (Spülgutteilen).

Bei dem in FIG. 1 gezeigten Ausführungsbeispiel dient das Kamerasystem mit der zugeordneten Bildverarbeitungseinrichtung insbesondere dazu, eine Beladung der Transportvorrichtung mit Spülgut mindestens einer der folgenden Spülgutklassen zu erfassen:
▪ Besteck oder Besteckteile;
▪ Töpfe, Pfannen oder GN-Behälter;
▪ Gläser, insbesondere Trinkgläser;
▪ Tabletts oder tablettartige Gegenstände;
▪ Teller, Tassen oder Schalen;
▪ Utensilien;
▪ sonstiges Spülgut;
▪ gemischtes Spülgut; und/oder
▪ Spülgut aus Kunststoff.

Gemäß einer Ausgestaltung der in FIG. 1 schematisch dargestellten Transportspülmaschine 1 ist vorgesehen, dass die Steuereinrichtung 36, welche signal- oder datentechnisch mit dem Kamerasystem bzw. mit der dem Kamerasystem zugeordneten Bildverarbeitungseinrichtung verbunden ist, ausgebildet ist, insbesondere während einer Lern- oder Beobachtungsphase über mindestens einen Beobachtungszeitraum und vorzugsweise über mehrere Beobachtungszeiträume eine zeitliche Entwicklung der Beladung der Transportvorrichtung mit bestimmten Spülgutklassen zu ermitteln. Bei dem genannten Beobachtungszeitraum handelt es sich beispielsweise um eine Spülschicht, um einen Spültag oder um eine Spülwoche der Transportspülmaschine oder einen Zeitabschnitt hiervon.

Vorzugsweise ist die Steuereinrichtung ferner ausgebildet, "künstlich" Wissen aus der in der Lern- oder Beobachtungsphase erfassten zeitlichen Entwicklung der Beladung der Transportvorrichtung mit mindestens einer der genannten Spülgutklassen zu generieren. Die Steuereinrichtung lernt aus den in der Lern- oder Beobachtungsphase erfassten Beispielen und kann diese nach Beendigung der Lern- oder Beobachtungsphase verallgemeinern. Dazu können Algorithmen der Steuereinrichtung ein statistisches Modell aufbauen, welches auf Trainingsdaten beruht, und welches gegen die Testdaten getestet wird.

Insbesondere ist somit die Steuereinrichtung der Transportspülmaschine vorzugsweise ausgebildet, anhand der ermittelten zeitlichen Entwicklung der Beladung der Transportvorrichtung mit mindestens einer bestimmten Spülgutklasse ein Muster oder eine Gesetzmäßigkeit abzuleiten.

Die Steuereinrichtung ist ferner ausgebildet, anhand einer benutzerspezifischen Verwendung der Spülmaschine über einen vorab festgelegten oder festlegbaren Zeitraum, der insbesondere der Lern- oder Beobachtungsphase entspricht, Zeitperioden während mindestens eines Spültags, während mindestens einer Spülschicht oder während mindestens einer Spülwoche der Spülmaschine zu identifizieren, in welchen von der Transportspülmaschine mindestens eine bestimmte Spülgutklasse zumindest überwiegend zu behandeln ist. Für diese Zeitperioden werden dann mit Hilfe der Steuereinrichtung entsprechende an die mindestens eine bestimmte Spülgutklasse angepasste Behandlungsparameter eingestellt.

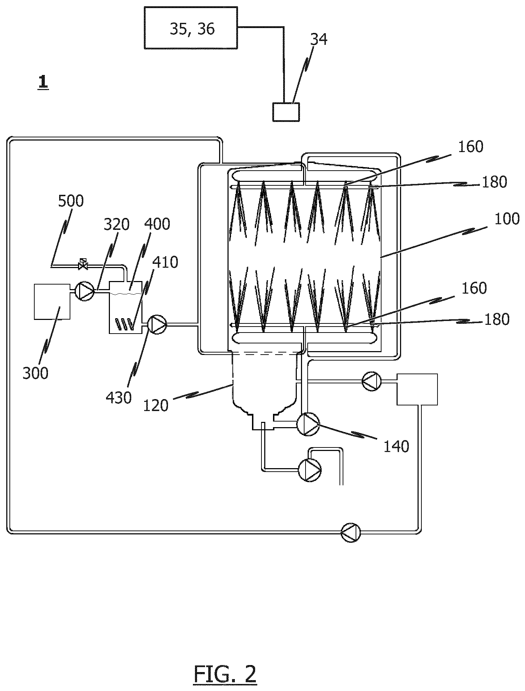

In FIG. 2 ist eine weitere exemplarische Ausführungsform der erfindungsgemäßen Spülmaschine 1 gezeigt. Hierbei handelt es sich um eine als Programmautomat ausgeführte Geschirrspülmaschine. Es wird darauf hingewiesen, dass diese lediglich die zum Verständnis der Erfindung benötigten Bauteile aufweist.

Die in FIG. 2 dargestellte Spülmaschine 1 weist eine Behandlungskammer 100 mit einem zugeordneten Waschtank 120 auf. Der Waschtank 120 dient zur Aufnahme einer Behandlungsflüssigkeit, welche über eine Waschpumpe 140 zu einer Vielzahl von Waschdüsen 160 gefördert werden kann. Die Waschdüsen 160 befinden sich insbesondere gemäß der dargestellten Ausführungsform im oberen und unteren Bereich der Behandlungskammer 100. Diese sind über eine Waschleitung 150 mit dem Waschtank 120 verbunden. Da der Waschtank 120 sich im unteren Bereich der Behandlungskammer 100 befindet, kann hierdurch eine Rezirkulation der Behandlungsflüssigkeit nach dem Besprühen des Spülguts erfolgen.

Die gezeigte Spülmaschine 1 weist ferner mindestens ein Klarspülsystem zum Bereitstellen einer Klarspülflüssigkeit auf. Das Klarspülsystem besteht in der dargestellten Ausführungsform aus einem Vorratsbehälter 300, welcher ein Klarspülkonzentrat beinhaltet. Wie es aus der FIG. 2 zu erkennen ist, ist der Vorratsbehälter 300 des Klarspülsystems über eine Fluidleitung 320 mit einem Wassererwärmer 400 verbunden. Der Wassererwärmer 400 weist einen Frischwasseranschluss 500 auf, über welchen Frischwasser (z. B. Leitungswasser) in den Wassererwärmer 400 eingebracht werden kann. Das im Wassererwärmer 400 befindlichen Frischwasser wird durch eine Heizeinrichtung 410 erwärmt und mit dem Klarspülkonzentrat des Vorratsbehälters 300 versetzt. Hierzu wird das Klarspülkonzentrat durch eine Dosierpumpe 310 aus dem Vorratsbehälter 300 zum Wassererwärmer 400 gefördert. Die aus einer Kombination aus Frischwasser und Klarspülkonzentrat entstehende Klarspülflüssigkeit kann über eine Klarspülpumpe 430 und die dazu gehörigen Klarspülleitungen 440 zu einer Vielzahl von Klarspüldüsen 180 gefördert werden. Ähnlich wie die Waschdüsen 160 befinden sich auch die Klarspüldüsen 180 im Inneren der Behandlungskammer 100 der Spülmaschine 1.

Eine in FIG. 2 nur schematisch dargestellte Programmsteuereinrichtung 36 dient Steuerung von mindestens einem Reinigungsprogramm und ist derart ausgebildet und mit den steuerbaren Komponenten der Spülmaschine 1, um ein Reinigungsverfahren (Reinigungszyklus) mit den folgenden nacheinander auszuführenden Schritten (Phasen) zu realisieren:
1. eine Waschphase, bei welcher Waschflüssigkeit aus dem Waschtank 120 mittels der Waschpumpe 140 durch das Waschleitungssystem 150 in die Behandlungskammer 100 gesprüht wird und dann von der Behandlungskammer 100 durch Schwerkraft in den Waschtank 120 zurückfließen kann;
2. eine Frischwasser-Klarspülphase, bei welcher beheiztes oder unbeheiztes Frischwasser oder Frischwasser mit zudosiertem Klarspüler als Klarspülflüssigkeit mittels der Klarspülpumpe 430 in die Behandlungskammer 100 gesprüht wird und dann von der Behandlungskammer 100 durch Schwerkraft in den Waschtank 120 fließen kann; und
3. (optional) eine Trocknungsphase, bei welcher Trocknungsluft innerhalb der Behandlungskammer 100 zirkuliert.

Die erfindungsgemäße Spülmaschine 1 - wie sie beispielsweise in FIG. 2 dargestellt ist - zeichnet sich unter anderem dadurch aus, dass eine in den Zeichnungen nur schematisch angedeutete Spülgutdetektorvorrichtung 34 vorgesehen ist, welche dazu dient, die Art oder Klasse des in der Behandlungskammer 100 aufgenommenen Spülgutes zu erfassen. Die Spülgutdetektorvorrichtung 34 ist vorzugsweise derart innerhalb oder außerhalb der Behandlungskammer 100 angeordnet, dass in deren Detektionsbereich entweder das in der Behandlungskammer 100 aufgenommene Spülgut oder ein in der Behandlungskammer 100 eingesetzter Spülgutkorb fällt. Unter dem hierin verwendeten Begriff "Spülgutdetektorvorrichtung" ist jedwede Detektionsvorrichtung zu verstehen, welche ausgelegt ist, die Spülgutart direkt oder indirekt zu erfassen bzw. zu bestimmen.

Wie auch bei der in FIG. 1 gezeigten Transportspülmaschine ist die Programmsteuereinrichtung 36 des in FIG. 2 gezeigten Programmautomat 1 ausgebildet, "künstlich" Wissen aus der in der Lern- oder Beobachtungsphase erfassten zeitlichen Entwicklung der Beladung der Behandlungskammer 100 mit mindestens einer der zuvor genannten Spülgutklassen zu generieren. Die Steuereinrichtung 36 lernt aus den in der Lern- oder Beobachtungsphase erfassten Beispielen und kann diese nach Beendigung der Lern- oder Beobachtungsphase verallgemeinern. Dazu können Algorithmen der Steuereinrichtung 36 ein statistisches Modell aufbauen, welches auf Trainingsdaten beruht, und welches gegen die Testdaten getestet wird.

Insbesondere ist somit die Steuereinrichtung 36 ausgebildet, anhand der ermittelten zeitlichen Entwicklung der Beladung der Behandlungskammer 100 mit mindestens einer bestimmten Spülgutklasse ein Muster oder eine Gesetzmäßigkeit abzuleiten.

Die Steuereinrichtung 36 ist ferner ausgebildet, anhand einer benutzerspezifischen Verwendung der Spülmaschine 1 über einen vorab festgelegten oder festlegbaren Zeitraum, der insbesondere der Lern- oder Beobachtungsphase entspricht, Zeitperioden während mindestens eines Spültags, während mindestens einer Spülschicht oder während mindestens einer Spülwoche der Spülmaschine 1 zu identifizieren, in welchen von der Spülmaschine 1 mindestens eine bestimmte Spülgutklasse zumindest überwiegend zu behandeln ist. Für diese Zeitperioden werden dann mit Hilfe der Steuereinrichtung 36 entsprechende an die mindestens eine bestimmte Spülgutklasse angepasste Behandlungsparameter eingestellt.

## Patentansprüche

1. Gewerbliche Spülmaschine (1) mit mindestens einem Waschsystem zum Waschen von Spülgut, mit mindestens einem Klarspülsystem zum Klarspülen des gewaschenen Spülguts und optional mit einem Trocknungssystem zum optionalen Trocknen des klargespülten Spülguts, wobei die Spülmaschine (1) ein Kamerasystem (34) aufweist, welches ausgebildet ist, vorzugsweise kontinuierlich oder zu vorab festgelegten oder festlegbaren Zeiten und/oder Ereignissen Bilder von dem in der Spülmaschine (1) zu behandelnden Spülgut oder von dem in der Spülmaschine (1) behandelten Spülgut aufzunehmen,
**dadurch gekennzeichnet, dass**
die Spülmaschine (1) ausgebildet ist, im Rahmen einer Lern- oder Beobachtungsphase zu ermitteln, zu welchen Zeiträumen einer Spülschicht oder eines Spültags der Spülmaschine (1), welche Spülgutklasse vorwiegend zu behandeln ist,
wobei ferner eine Auswerteeinrichtung vorgesehen ist, welche ausgebildet ist, insbesondere im Zuge eines Profiling-Prozesses anhand der aufgenommenen Bilder ein das zeitliche Nutzungsverhalten des Betreibers der Spülmaschine (1) betreffendes Muster zu erstellen,
wobei die Spülmaschine (1) ferner eine Steuereinrichtung (36) aufweist, welche ausgebildet ist, während des Betriebs der Spülmaschine (1) in einer Spülschicht, in einem Spültag oder in einer Spülwoche vorzugsweise automatisch und noch bevorzugter wahlweise automatisch mindestens einen insbesondere vorab festgelegten Behandlungsparameter, nach welchem das Spülgut beim Waschen, Klarspülen und/oder optionalen Trocknen zu behandeln ist, in Abhängigkeit von dem erstellten Muster proaktiv und insbesondere prädiktiv einzustellen und/oder insbesondere zeitlich zu variieren.

2. Spülmaschine (1) nach Anspruch 1,
wobei die Auswerteeinrichtung ferner ausgebildet ist, in Abhängigkeit von dem erstellten, das zeitliche Nutzungsverhalten des Betreibers der Spülmaschine (1) betreffenden Muster eine Statistik und/oder eine entsprechende Meldung zu generieren und an insbesondere den Betreiber der Spülmaschine (1) und/oder an den Hersteller der Spülmaschine (1) und/oder dessen Vertriebspartner auszugeben, wobei die Meldung vorzugsweise eine Empfehlung für einen insbesondere im Hinblick auf die Reinigungseffizienz und im Hinblick auf eine Einsparung von Ressourcen optimierten Betrieb der Spülmaschine (1) enthält, und/oder wobei die Empfehlung vorzugsweise eine Empfehlung zur Auf- oder Umrüstung der Spülmaschine (1) mit einem optimierten Behandlungsprogramm und/oder eine Empfehlung für die Verwendung einer an das Nutzungsverhalten des Betreibers der Spülmaschine (1) angepassten Chemikalie, insbesondere Reinigungs-Chemikalie, ist.

3. Spülmaschine (1) nach Anspruch 2,
wobei der mindestens eine Behandlungsparameter, der in Abhängigkeit von dem erstellten Muster proaktiv und insbesondere prädiktiv einstellbar und/oder zeitlich variierbar ist, aus folgender Gruppe ausgewählt ist:
- eine Temperatur einer Waschflüssigkeit, die zum Waschen des Spülguts auf das Spülgut versprüht wird;
- eine pro Zeiteinheit beim Waschen des Spülguts auf das Spülgut versprühte Menge an Waschflüssigkeit;
- ein Düsendruck der beim Waschen des Spülguts auf das Spülgut versprühten Waschflüssigkeit;
- eine Reinigerkonzentration der beim Waschen des Spülguts auf das Spülgut versprühten Waschflüssigkeit;
- eine Zeitdauer eines Waschvorgangs;
- eine Temperatur einer Klarspülflüssigkeit, die zum Klarspülen des Spülguts auf das Spülgut versprüht wird;
- eine pro Zeiteinheit beim Klarspülen des Spülguts auf das Spülgut versprühte Menge an Klarspülflüssigkeit;
- ein Düsendruck der beim Klarspülen des Spülguts auf das Spülgut versprühten Klarspülflüssigkeit;
- eine Klarspülerkonzentration der beim Klarspülen des Spülguts auf das Spülgut versprühten Klarspülflüssigkeit;
- eine Zeitdauer eines Klarspülvorgangs;
- eine Temperatur einer Trocknungsluft, die zum optionalen Trocknen des Spülguts auf das Spülgut geblasen wird;
- eine pro Zeiteinheit beim optionalen Trocknen des Spülguts auf das Spülgut geblasene Menge an Trocknungsluft;
- ein Druck, mit welchem beim optionalen Trocknen des Spülguts Trocknungsluft auf das Spülgut geblasen wird; und/oder
- eine Zeitdauer eines optionalen Trocknungsvorgangs.

4. Spülmaschine (1) nach einem der Ansprüche 1 bis 3,
wobei zum Erstellen des das zeitliche Nutzungsverhalten des Betreibers der Spülmaschine (1) betreffenden Gesamtbilds die Auswerteeinrichtung ausgebildet ist, insbesondere während der Lern- oder Beobachtungsphase über mindestens einen Beobachtungszeitraum und vorzugsweise über mehrere Beobachtungszeiträume, die jeweils vorzugsweise eine Spülschicht der Spülmaschine (1), einen Spültag der Spülmaschine (1), eine Spülwoche der Spülmaschine (1) oder einen Zeitabschnitt hiervon betreffen,
- eine zeitliche Entwicklung eines insbesondere mittleren Beladungsgrads der Spülmaschine (1) mit Spülgut zu ermitteln; und/oder
- eine zeitliche Entwicklung einer insbesondere mittleren Beladung der Spülmaschine (1) mit Spülgut mit mindestens einer vorab festgelegten oder festlegbaren Spülgutklasse zu ermitteln; und/oder
- eine zeitliche Entwicklung eines insbesondere mittleren Verschmutzungsgrads des in der Spülmaschine (1) zu behandelnden Spülguts zu ermitteln; und/oder
- eine zeitliche Entwicklung einer insbesondere mittleren Verschmutzungsart des in der Spülmaschine (1) zu behandelnden Spülguts zu ermitteln,
und anhand der ermittelten zeitlichen Entwicklung des insbesondere mittleren Beladungsgrads der Spülmaschine (1) mit Spülgut, anhand der zeitlichen Entwicklung der insbesondere mittleren Beladung der Spülmaschine (1) mit Spülgut mit der mindestens einen vorab festgelegten oder festlegbaren Spülgutklasse, anhand der ermittelten zeitlichen Entwicklung des insbesondere mittleren Verschmutzungsgrads des in der Spülmaschine (1) zu behandelnden Spülguts und/oder anhand der ermittelten zeitlichen Entwicklung der insbesondere mittleren Verschmutzungsart des in der Spülmaschine (1) zu behandelnden Spülguts ein Muster oder eine Gesetzmäßigkeit abzuleiten, wobei die Lern- oder Beobachtungsphase vorzugsweise manuell initiierbar ist.

5. Spülmaschine (1) nach Anspruch 4,
wobei die Auswerteeinrichtung ausgebildet ist, die von dem Kamerasystem (34) aufgenommenen Bilder auszuwerten und zu ermitteln, ob zum Zeitpunkt der entsprechenden Bildaufnahme in dem entsprechenden Bild Spülgut mindestens einer der folgenden Spülgutklassen vorhanden war:
- Besteck oder Besteckteile;
- Töpfe, Pfannen oder GN-Behälter;
- Gläser, insbesondere Trinkgläser;
- Tabletts oder tablettartige Gegenstände;
- Teller, Tassen oder Schalen;
- Utensilien;
- sonstiges Spülgut;
- gemischtes Spülgut; und/oder
- Spülgut aus Kunststoff.

6. Spülmaschine (1) nach Anspruch 4 oder 5,
wobei die Auswerteeinrichtung ausgebildet ist, insbesondere während der Lern- oder Beobachtungsphase über den mindestens einen Beobachtungszeitraum eine zeitliche Entwicklung eines vorzugsweise mittleren Verschmutzungsgrads des Spülguts, welches zum Zeitpunkt der entsprechenden Bildaufnahme in dem Bildaufnahmebereich des Kamerasystems (34) vorhanden war, und/oder eine zeitliche Entwicklung einer vorzugsweise mittleren Verschmutzungsart des Spülguts, welches zum Zeitpunkt der entsprechenden Bildaufnahme in dem Bildaufnahmebereich des Kamerasystems (34) vorhanden war, zu ermitteln, wobei die Spülmaschine (1) eine Steuereinrichtung (36) aufweist, welche ausgebildet ist, vorzugsweise automatisch und noch bevorzugter wahlweise automatisch in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv mindestens eine die Güte einer von dem Waschsystem zu versprühenden Waschflüssigkeit beeinfließende Maßnahme und/oder proaktiv und insbesondere prädiktiv mindestens eine die Reinigungsleistung der Spülmaschine (1) beeinfließende Maßnahme zu initiieren.

7. Spülmaschine (1) nach Anspruch 6,
wobei die Steuereinrichtung (36) ausgebildet ist, zum Einstellen oder Anpassen der Reinigungsleistung der Spülmaschine (1) in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine Volumenstrommenge und/oder einen Düsendruck und/oder eine Temperatur der von dem Waschsystem zu versprühenden Waschflüssigkeit einzustellen; und/oder
wobei die Steuereinrichtung (36) ausgebildet ist, zum Einstellen oder Anpassen der Reinigungsleistung der Spülmaschine (1) in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine Reinigerkonzentration der in der von dem Wachsystem zu versprühenden Waschflüssigkeit einzustellen; und/oder
wobei die Steuereinrichtung (36) ausgebildet ist, zum Einstellen oder Anpassen der Reinigungsleistung der Spülmaschine (1) in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine Zeitdauer eines Waschvorgangs und/oder eine Zeitdauer eines Klarspülvorgangs einzustellen; und/oder
wobei die Steuereinrichtung (36) ausgebildet ist, zum Einstellen oder Anpassen der Reinigungsleistung der Spülmaschine (1) in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine von dem Klarspülsystem eingebrachte Frischwassernachspülmenge einzustellen; und/oder
wobei die Steuereinrichtung (36) ausgebildet ist, zum Einstellen oder Anpassen der Reinigungsleistung der Spülmaschine (1) in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine separate Waschtankregenerationsmenge einzustellen; und/oder
wobei die Steuereinrichtung (36) ausgebildet ist, zum Einstellen oder Anpassen der Reinigungsleistung der Spülmaschine (1) in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine separate und insbesondere zusätzliche Maschineneinrichtungen, insbesondere ein Reiniger-Direktsprühsystem, einzustellen und/oder zu aktivieren; und/oder
wobei die Steuereinrichtung (36) ausgebildet ist, zum Einstellen oder Anpassen der Reinigungsleistung der Spülmaschine (1) in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv ein zusätzliches Vorabräum- oder Waschmodul zur Behandlung von besonders stark verschmutztem Spülgut zu aktivieren.

8. Spülmaschine (1) nach Anspruch 6 oder 7,
wobei die Steuereinrichtung (36) ausgebildet ist, vorzugsweise automatisch und noch bevorzugter wahlweise automatisch in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv die von dem mindestens einen Waschsystem zu versprühende Waschflüssigkeit zu regenerieren, und zwar indem vorzugsweise in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv eine pro Zeiteinheit der zu versprühenden Waschflüssigkeit zuzuführende Regenerationswassermenge insbesondere regelnd eingestellt wird.

9. Spülmaschine (1) nach einem der Ansprüche 6 bis 8,
wobei die Steuereinrichtung (36) ausgebildet ist, vorzugsweise automatisch und noch bevorzugter wahlweise automatisch in Abhängigkeit von der ermittelten zeitlichen Entwicklung des insbesondere mittleren Verschmutzungsgrads des Spülguts und/oder in Abhängigkeit von der ermittelten zeitlichen Entwicklung der insbesondere mittleren Verschmutzungsart des Spülguts proaktiv und insbesondere prädiktiv das Schmutztragevermögen der von dem mindestens einen Waschsystem zu versprühenden Waschflüssigkeit einzustellen oder zumindest an die ermittelte zeitliche Entwicklung des insbesondere mittleren Verschmutzungsgrads und/oder an die ermittelte zeitliche Entwicklung der insbesondere mittleren Verschmutzungsart des Spülguts anzupassen.

10. Spülmaschine (1) nach Anspruch 9,
wobei die Steuereinrichtung (36) ausgebildet ist, zum Einstellen oder Anpassen des Schmutztragevermögens der von dem mindestens einen Waschsystem zu versprühenden Waschflüssigkeit proaktiv und insbesondere prädiktiv eine Temperatur der Waschflüssigkeit und/oder eine Reinigerkonzentration der Waschflüssigkeit insbesondere regelnd einzustellen.

11. Spülmaschine (1) nach einem der Ansprüche 4 bis 10,
wobei die Steuereinrichtung (36) ferner ausgebildet ist, den Behandlungszeitraum, der vorzugsweise eine Spülschicht, einen Spültag oder eine Spülwoche der Spülmaschine (1) oder einen Zeitabschnitt hiervon betrifft, in einen ersten Unterzeitraum und in mindestens einen weiteren, zweiten Unterzeitraum einzuteilen, wobei:
- in dem ersten Unterzeitraum des Beobachtungszeitraums ein ermittelter, insbesondere mittlerer Beladungsgrad der Spülmaschine (1) mit Spülgut einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Spülmaschine (1) mit Spülgut einem zweiten relativen Wert entspricht oder in einen zweiten relativen Wertebereich fällt, wobei der erste relative Wert des insbesondere mittleren Beladungsgrads der Spülmaschine (1) mit Spülgut einer Beladung der Spülmaschine (1) mit Spülgut entspricht, die vorzugsweise größer ist als die Beladung der Spülmaschine (1) mit Spülgut, die dem zweiten relativen Wert des insbesondere mittleren Beladungsgrads der Spülmaschine (1) mit Spülgut entspricht; und/oder
- in dem ersten Unterzeitraum des Beobachtungszeitraums ein ermittelter, insbesondere mittlerer Beladungsgrad der Spülmaschine (1) mit mindestens einer vorab festgelegten oder festlegbaren Spülgutklasse einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Spülmaschine (1) mit der mindestens einen vorab festgelegten oder festlegbaren Spülgutklasse einem zweiten relativen Wert entspricht oder in einen zweiten relativen Wertebereich fällt, wobei der erste relative Wert des insbesondere mittleren Beladungsgrads der Spülmaschine (1) mit der mindestens einen Spülgutklasse einer Beladung der Spülmaschine (1) mit der mindestens einen Spülgutklasse entspricht, die vorzugsweise größer ist als die Beladung der Spülmaschine (1) mit der mindestens einen Spülgutklasse, die dem zweiten relativen Wert des insbesondere mittleren Beladungsgrads der Spülmaschine (1) mit der mindestens einen Spülgutklasse entspricht; und/oder
- in dem ersten Unterzeitraum des Beobachtungszeitraums ein ermittelter, insbesondere mittlerer Verschmutzungsgrad des in der Spülmaschine (1) zu behandelnden Spülguts einem ersten relativen Wert entspricht oder in einen ersten relativen Wertebereich fällt, und wobei in dem mindestens einen zweiten Unterzeitraum des Beobachtungszeitraums der ermittelter, insbesondere mittlerer Verschmutzungsgrad des in der Spülmaschine (1) zu behandelnden Spülguts einem zweiten relativen Wert entspricht oder in einen zweiten relativen Wertebereich fällt, wobei der erste relative Wert des insbesondere mittleren Verschmutzungsgrads des Spülguts einem Schmutzeintrag in die Spülmaschine (1) entspricht, der vorzugsweise größer ist als ein Schmutzeintrag in die Spülmaschine (1), der dem zweiten relativen Wert des insbesondere mittleren Verschmutzungsgrad des Spülguts entspricht; und/oder
- in dem ersten Unterzeitraum des Beobachtungszeitraums eine ermittelte, insbesondere mittlere Verschmutzungsart des in der Spülmaschine (1) zu behandelnden Spülguts einem ersten relativen Wert entspricht oder in einen ersten relativen Wertebereich fällt, und wobei in dem mindestens einen zweiten Unterzeitraum des Beobachtungszeitraums die ermittelte, insbesondere mittlere Verschmutzungsart des in der Spülmaschine (1) zu behandelnden Spülguts einem zweiten relativen Wert entspricht oder in einen zweiten relativen Wertebereich fällt, wobei der erste relative Wert der insbesondere mittleren Verschmutzungsart des Spülguts einer Verschmutzungsart des Spülguts entspricht, die verschieden von der insbesondere mittleren Verschmutzungsart des Spülguts ist, die dem zweiten relativen Wert der insbesondere mittleren Verschmutzungsart des Spülguts entspricht.

12. Spülmaschine (1) nach Anspruch 11,
wobei die Steuereinrichtung (36) ferner ausgebildet ist, insbesondere nach Beendigung der Lern- oder Beobachtungsphase vorzugsweise automatisch und noch bevorzugter wahlweise automatisch während des Betriebs der Spülmaschine (1) in einer Spülschicht, in einem Spültag oder in einer Spülwoche für den ersten Unterzeitraum mindestens einen ersten, insbesondere vorab festgelegten Behandlungsparameter, nach welchem das Spülgut während des ersten Unterzeitraums beim Waschen, Klarspülen und/oder optionalen Trocknen zu behandeln ist, proaktiv auszuwählen und vorzugsweise prädiktiv entsprechend einzustellen, und für den mindestens einen zweiten Unterzeitraum mindestens einen zweiten, insbesondere vorab festgelegten Behandlungsparameter, nach welchem das Spülgut während des mindestens einen zweiten Unterzeitraums beim Waschen, Klarspülen und/oder optionalen Trocknen zu behandeln ist, proaktiv auszuwählen und vorzugsweise prädiktiv einzustellen.

13. Spülmaschine (1) nach Anspruch 11 oder 12,
wobei der erste Unterzeitraum mindestens ein erstes Zeitfenster eines Spültags, einer Spülschicht oder einer Spülwoche der Spülmaschine (1) ist, und wobei der zweite Unterzeitraum mindestens ein von dem ersten Zeitfenster verschiedenes, zweites Zeitfenster eines Spültags, einer Spülschicht oder einer Spülwoche der Spülmaschine (1) ist; oder
wobei der erste Unterzeitraum mindestens ein erster Wochentag, und wobei der zweite Unterzeitraum mindestens ein von dem ersten Wochentag verschiedener zweiter Wochentag ist.

14. Spülmaschine (1) nach einem der Ansprüche 1 bis 13,
wobei die Auswerteeinrichtung ausgebildet ist, eine benutzerspezifische Verwendung der Spülmaschine (1) insbesondere über einen vorab festgelegten oder festlegbaren Zeitraum, der insbesondere einer Lern - oder Beobachtungsphase entspricht, zu ermitteln, und wobei die Auswerteeinrichtung ferner ausgebildet ist, anhand der ermittelten benutzerspezifischen Verwendung der Spülmaschine (1) insbesondere über den vorab festgelegten oder festlegbaren Zeitraum:
- mindestens eine erste Zeitperiode während mindestens eines Spültags, einer Spülschicht oder einer Spülwoche der Spülmaschine (1) zu ermitteln, in welchen von der Spülmaschine (1) pro Zeiteinheit nur eine relativ geringe Anzahl an Spülgutteilen zu behandeln ist, und mindestens eine zweite Zeitperiode während mindestens eines Spültags, einer Spülschicht oder einer Spülwoche der Spülmaschine (1) zu ermitteln, in welchen von der Spülmaschine (1) pro Zeiteinheit eine relativ hohe Anzahl an Spülgutteilen zu behandeln ist, und für diese Zeitperioden an die pro Zeiteinheit zu behandelnde Anzahl an Spülgutteilen angepasste Behandlungsparameter vorzugsweise automatisch und noch bevorzugter wahlweise automatisch proaktiv und insbesondere prädiktiv einzustellen; und/oder
- Zeitperioden während mindestens eines Spültags, einer Spülschicht oder einer Spülwoche der Spülmaschine (1) zu ermitteln, in welchen, von der Spülmaschine (1) mindestens eine bestimmte Spülgutklasse zumindest überwiegend zu behandeln ist, und für diese Zeitperioden an die mindestens eine bestimmte Spülgutklasse angepasste Behandlungsparameter vorzugsweise automatisch und noch bevorzugter wahlweise automatisch proaktiv und insbesondere prädiktiv einzustellen; und/oder
- Zeitperioden während mindestens eines Spültags, einer Spülschicht oder einer Spülwoche der Spülmaschine (1) zu ermitteln, in welchen, von der Spülmaschine (1) zumindest überwiegend stark verschmutztes Spülgut zu behandeln ist, und für diese Zeitperioden an den Verschmutzungsgrad und/oder an die Verschmutzungsart des Spülguts angepasste Behandlungsparameter vorzugsweise automatisch und noch bevorzugter wahlweise automatisch proaktiv und insbesondere prädiktiv einzustellen; und/oder
- Zeitperioden während mindestens eines Spültags, einer Spülschicht oder einer Spülwoche der Spülmaschine (1) zu ermitteln, in welchen, von der Spülmaschine (1) zumindest überwiegend nur leicht verschmutztes Spülgut zu behandeln ist, und für diese Zeitperioden an den Verschmutzungsgrad und/oder an die Verschmutzungsart des Spülguts angepasste Behandlungsparameter vorzugsweise automatisch und noch bevorzugter wahlweise automatisch proaktiv und insbesondere prädiktiv einzustellen.

15. Verfahren zum Betreiben einer gewerblichen Spülmaschine (1) nach einem der Ansprüche 1 bis 14, wobei die Spülmaschine (1) mindestens ein Waschsystem zum Waschen des zu behandelnden Spülguts, mindestens ein Klarspülsystem zum Klarspülen des gewaschenen Spülguts und optional mindestens ein Trocknungssystem zum optionalen Trocknen des klargespülten Spülguts aufweist, und wobei das Verfahren die folgenden Verfahrensschritte aufweist:
- mit Hilfe eines Kamerasystems (34) werden vorzugsweise kontinuierlich oder zu vorab festgelegten oder festlegbaren Zeiten und/oder Ereignissen Bilder von dem in der Spülmaschine (1) zu behandelnden Spülgut oder von dem in der Spülmaschine (1) behandelten Spülgut aufgenommen;
- durch die Auswerteeinrichtung wird, insbesondere im Zuge eines Profiling-Prozesses, anhand der aufgenommenen Bilder ein das zeitliche Nutzungsverhalten des Betreibers der Spülmaschine (1) betreffendes Muster erstellt; und
- durch die Steuereeinrichtung (36) wird während des Betriebs der Spülmaschine (1) in einer Spülschicht, in einem Spültag oder in einer Spülwoche vorzugsweise automatisch und noch bevorzugter wahlweise automatisch mindestens ein insbesondere vorab festgelegten Behandlungsparameter, nach welchem das Spülgut beim Waschen, Klarspülen und/oder optionalen Trocknen zu behandeln ist, in Abhängigkeit von dem erstellten Muster proaktiv und insbesondere prädiktiv eingestellt und/oder insbesondere zeitlich variiert.

## Claims

1. A commercial warewasher (1) having at least one washing system for washing washware, with at least one rinsing system for rinsing the washed washware and optionally a drying system for the optional drying of the rinsed washware, wherein the warewasher (1) comprises a camera system (34), which is configured so as to capture images, preferably continuously or at predefined or definable times and/or events, of the washware to be treated in the warewasher (1) or of the washware treated in the warewasher (1), **characterized in that**
the warewasher (1) is designed to determine, as part of a learning or observation phase, at which periods of a washing shift or a washing day of the warewasher (1) which class of washware is to be predominantly treated, wherein an evaluation device is further provided, which is configured so as to create a pattern relating to the temporal usage behavior of the operator of the warewasher (1), in particular in the course of a profiling process based on the captured images,
wherein the warewasher (1) further comprises a control device (36), which is configured so as to proactively and in particular predictively set and/or temporally vary at least one treatment parameter according to which the washware is to be treated during washing, rinsing, and/or optional drying during operation of the warewasher (1) in a washing shift, in a washing day, or in a washing week, preferably automatically and even more preferably optionally automatically, as a function of the created pattern.

2. Warewasher (1) according to claim 1, wherein the evaluation device is further configured, as a function of the created pattern relating to the temporal usage behavior of the operator of the warewasher (1), to generate statistics and/or a corresponding notification and to output the latter to the operator of the warewasher (1) and/or to the manufacturer of the warewasher (1) and/or its distributor, wherein the notification preferably contains a recommendation for an operation of the warewasher (1) that is optimized, in particular with respect to the cleaning efficiency and with respect to conserving resources, and/or wherein the recommendation preferably is a recommendation to upgrade or retrofit the warewasher (1) with an optimized treatment program and/or a recommendation to use a chemical, in particular cleaning chemicals, adapted to the usage behavior of the operator of the warewasher (1).

3. Warewasher (1) according to claim 2, wherein the at least one treatment parameter, which is proactively and in particular predictively set and/or temporally-variable as a function of the pattern created, is selected from the following group:
- a temperature of a washing liquid that is sprayed onto the washware for washing the washware;
- an amount of washing liquid sprayed onto the washware per unit of time during washing of the washware;
- a nozzle pressure of the washing liquid sprayed onto the washware during washing of the washware;
- a cleaning agent concentration of the washing liquid sprayed onto the washware during washing of the washware;
- a duration of a washing operation;
- a temperature of a rinsing liquid that is sprayed onto the washware for rinsing the washware;
- an amount of rinsing liquid sprayed onto the washware per unit of time during rinsing of the washware;
- a nozzle pressure of the rinsing liquid sprayed onto the washware during rinsing of the washware;
- a rinsing aid concentration of the rinsing liquid sprayed onto the washware during rinsing of the washware;
- a duration of a rinsing operation;
- a temperature of a drying air that is blown onto the washware for optionally drying the washware;
- an amount of drying air blown onto the washware per unit of time during optional drying of the washware;
- a pressure at which drying air is blown onto the washware during optional drying of the washware; and/or
- a duration of an optional drying operation.

4. The dishwasher (1) according to one of claims 1 to 3,
wherein, for creating the overall picture relating to the temporal usage behavior of the operator of the warewasher (1), the evaluation device is configured so as to do the following, in particular during the learning or observation phase over at least one observation period and preferably over a plurality of observation periods, each preferably relating to a washing shift of the warewasher (1), a washing day of the warewasher (1), a washing week of the warewasher (1), or a portion thereof,
- determine a temporal profile of an in particular average load level of the warewasher (1) with the washware; and/or
- determine a temporal profile of an in particular average loading of the warewasher (1) with washware having at least one predefined or definable washware category; and/or
- determine a temporal profile of an in particular average degree of soiling of the washware to be treated in the warewasher (1); and/or
- determine a temporal profile of an in particular average type of soiling of the washware to be treated in the warewasher (1),
and, based on the determined temporal profile of the in particular average load level of the warewasher (1) with washware, based on the temporal profile of the in particular average loading of the warewasher (1) with washware having the at least one predefined or definable washware category, based on the determined temporal profile of the in particular average degree of soiling of the washware to be treated in the warewasher (1), and/or based on the determined temporal profile of the in particular average type of soiling of the washware to be treated in the warewasher (1), to derive a pattern a set of rules, wherein the learning or observation phase can preferably be initiated manually.

5. Warewasher (1) according to claim 4, wherein the evaluation device is configured so as to evaluate the images captured by the camera system (34) and determine whether at least one of the following washware categories was present at the time of the corresponding image capture:
- cutlery or pieces of cutlery;
- pots, pans, or GN containers;
- glasses, in particular drinking glasses;
- trays or tray-like objects;
- plates, cups, or bowls;
- utensils;
- other washware;
- mixed washware; and/or - plastic washware.

6. Warewasher (1) according to claim 4 or 5, wherein the evaluation device is configured in order to determine, in particular during the learning or observation phase over the at least one observation period, a temporal profile of a preferably average degree of soiling of the washware existing in the image capture region of the camera system (34) at the time of the corresponding image capture and/or a temporal profile of a preferably average type of soiling of the washware existing in the image capture region of the camera system (34) at the time of the corresponding image capture, wherein the warewasher (1) comprises a control device (36), which is configured in order to, proactively and in particular predictively, preferably automatically and even more preferably optionally automatically as a function of the determined temporal profile of the in particular average degree of soiling of the washware and/or as a function of the determined temporal profile of the in particular average type soiling of the washware, initiate at least one measure influencing the quality of a washing liquid to be sprayed by the washing system and/or proactively and in particular predictively at least one measure influencing the cleaning power of the warewasher (1).

7. Warewasher (1) according to claim 6, wherein the control device (36) is configured in order to proactively and in particular predictively set a volumetric flow rate and/or a nozzle pressure and/or a temperature of the washing liquid to be sprayed by the washing system for setting or adjusting the cleaning performance of the warewasher (1) as a function of the determined temporal profile of the in particular average degree of soiling of the washware and/or as a function of the determined temporal profile of the in particular average type of soiling of the washware; and/or
wherein the control device (36) is configured in order to proactively and in particular predictively set a cleaning agent concentration of the washing liquid to be sprayed by the washing system for setting or adjusting the cleaning performance of the warewasher (1) as a function of the determined temporal profile of the in particular average degree of soiling of the washware and/or as a function of the determined temporal profile of the in particular average type of soiling of the washware; and/or
wherein the control device (36) is configured in order to proactively and in particular predictively set a duration of a washing operation and/or a duration of a rinsing operation for setting or adjusting the cleaning performance of the warewasher (1) as a function of the determined temporal profile of the in particular average degree of soiling of the washware and/or as a function of the determined temporal profile of the in particular average type of soiling of the washware; and/or
wherein the control device (36) is configured in order to proactively and in particular predictively set a quantity of fresh rinsewater introduced by the rinsing system for setting or adjusting the cleaning performance of the warewasher (1) as a function of the determined temporal profile of the in particular average degree of soiling of the washware and/or as a function of the determined temporal profile of the in particular average type of soiling of the washware; and/or
wherein the control device (36) is configured in order to proactively and in particular predictively set a separate wash tank regeneration quantity for setting or adjusting the cleaning performance of the warewasher (1) as a function of the determined temporal profile of the in particular average degree of soiling of the washware and/or as a function of the determined temporal profile of the in particular average type of soiling of the washware; and/or
wherein the control device (36) is configured in order to proactively and in particular predictively set and/or activate a separate and in particular additional machine devices [sic: device], in particular a cleaning agent direct spraying system, for setting or adjusting the cleaning performance of the warewasher (1) as a function of the determined temporal profile of the in particular average degree of soiling of the washware and/or as a function of the determined temporal profile of the in particular average degree of soiling of the washware; and/or
wherein the control device (36) is configured in order to proactively and in particular predictively activate an additional pre-clearing or washing module for treating in particular strongly soiled washware for setting or adjusting the cleaning performance of the warewasher (1) as a function of the determined temporal profile of the in particular average degree of soiling of the washware and/or as a function of the determined temporal profile of the in particular average degree of soiling of the washware; and/or

8. Warewasher (1) according to claim 6 or 7, wherein the control device (36) is configured in order to proactively and in particular predictively regenerate, preferably automatically and more preferably optionally automatically as a function of the determined temporal profile of the in particular average degree of soiling of the washware and/or as a function of a determined temporal profile of the in particular average type of soiling of the washware, the washing liquid to be sprayed by the at least one washing system, namely by setting, proactively and in particular predictively, in particular in a controlling manner, a regeneration water quantity to be added per unit of time to the washing liquid to be sprayed per unit of time, preferably as a function of a determined temporal profile of the in particular average degree of soiling of the washware and/or as a function of the determined temporal profile of the in particular average type of soiling of the washware.

9. Warewasher (1) according to one of claims 6 to 8, wherein the control device (36) is configured in order to proactively and in particular predictively set, preferably automatically and more preferably optionally automatically as a function of the determined temporal profile of the in particular average degree of soiling of the washware and/or as a function of the determined temporal profile of the in particular average type of soiling of the washware, the soil-carrying capacity of the washing liquid to be sprayed by the at least one washing system, or to at least adjust it to the determined temporal profile of the in particular average degree of soiling and/or the determined temporal profile of the in particular average type of soiling of the washware.

10. Warewasher (1) according to claim 9, wherein the control means (36) is configured in order to proactively and in particular predictively set, in particular in a controlling manner, a temperature of the washing liquid and/or cleaning agent concentration of the washing liquid for setting or adjusting the soil-carrying capacity of the washing liquid to be sprayed by the at least one washing system.

11. Warewasher (1) according to any of claims 4 to 10, wherein the control means (36) is further configured so as to divide the treatment period, which preferably relates to a washing shift, a washing day, or a washing week of the warewasher (1), or a period thereof, into a first sub-period and into at least one further second sub-period, wherein:
- in the first sub-period of the observation period, a determined in particular average load level of the warewasher (1) with washware corresponds to a first relative value or falls within a first relative value range, wherein, in the at least one second sub-period of the observation period, the determined in particular average load level of the warewasher (1) with washware corresponds to a second relative value or falls within a second relative value range, wherein the first relative value of the in particular average load level of the warewasher (1) with washware corresponds to a loading of the warewasher (1) with washware which is preferably larger than the loading of the warewasher (1) with washware corresponding to the second relative value of the in particular average load level of the warewasher (1) with washware; and/or
- in the first sub-period of the observation period, a determined in particular average load level of the warewasher (1) with at least one predefined or definable washware category corresponds to a first relative value or falls within a first relative value range, wherein, in the at least one second sub-period of the observation period, the determined in particular average load level of the warewasher (1) with at least one predefined or definable washware category corresponds to a second relative value or falls within a second relative value range, wherein the first relative value of the in particular average load level of the warewasher (1) with the at least one washware category corresponds to a loading of the warewasher (1) with the at least one washware category which is preferably larger than the loading of the warewasher (1) with the at least one washware category corresponding to the second relative value of the in particular average load level of the warewasher (1) with the at least one washware category; and/or
- in the first sub-period of the observation period, a determined in particular average degree of soiling of the washware to be treated in the warewasher (1) corresponds to a first relative value or falls within a first relative value range, wherein, in the at least one second sub-period of the observation period, the determined in particular average degree of soiling of the washware to be treated in the warewasher (1) corresponds to a second relative value or falls within a second relative value range, wherein the first relative value of the in particular average degree of soiling of the washware corresponds to a soil input into the warewasher (1) which is preferably larger than the soil input into the warewasher (1) corresponding to the second relative value of the in particular average degree of soiling of the washware; and/or
- in the first sub-period of the observation period, a determined in particular average type of soiling of the washware to be treated in the warewasher (1) corresponds to a first relative value or falls within a first relative value range, wherein, in the at least one second sub-period of the observation period, the determined in particular average type of soiling of the washware to be treated in the warewasher (1) corresponds to a second relative value or falls within a second relative value range, wherein the first relative value of the in particular average type of soiling of the washware corresponds to a type of soiling of the washware which is different than the type of soiling of the washware corresponding to the second relative value of the in particular average type of soiling of the washware.

12. Warewasher (1) according to claim 11, wherein the control device (36) is further configured in order to proactively select and preferably predictively set accordingly, in particular after the end of the learning or observation phase, preferably automatically and more preferably optionally automatically during the operation of the warewasher (1) in a washing shift, in a washing day, or in a washing week for the first sub-period, at least one first in particular predefined treatment parameter, according to which the washware is to be treated during washing, rinsing, and/or optional drying during the first sub-period, and for the at least one second sub-period, to proactively select and preferably predictively set accordingly at least one second in particular predefined treatment parameter, according to which the washware is to be treated during washing, rinsing, and/or optional drying during the at least second sub-period.

13. Warewasher (1) according to claim 11 or 12, wherein the first sub-period is at least a first window of a washing day, a washing shift, or a washing week of the warewasher (1), and wherein the second sub-period is at least a different window from the first window of a washing day, a washing shift, or a washing week of the warewasher (1); or
wherein the first sub-period is at least a first day of the week, and wherein the second sub-period is at least a second day of the week that is different from the first day of the week.

14. Warewasher (1) according to one of claims 1 to 13, wherein the evaluation device is configured in order to determine an operator-specific usage of the warewasher (1), in particular over a predefined or definable period of time, in particular corresponding to a learning or observation phase, and wherein the evaluation device is further configured in order to do the following, based on the determined operator-specific usage of the warewasher (1), in particular over the predefined or definable period of time:
- determine at least one first time period during at least one washing day, washing shift, or washing week of the warewasher (1) in which only a relatively small number of items to be washed are to be treated by the warewasher (1) per unit of time, and at least one second time period during at least one wash day, wash shift, or wash week of the warewasher
(1) to determine in which of the warewasher (1) a relatively high number of items to be washed are to be treated per unit of time, and for these time periods to set treatment parameters adapted to the number of items to be washed per unit of time, preferably automatically and even more preferably optionally automatically proactively and in particular predictively; and/or
- determine time periods during at least one washing day, washing shift, or washing week of the warewasher (1), in which at least one particular category of washware is to be treated by the warewasher (1) at least predominantly, and, for these time periods, to proactively and in particular predictively, preferably automatically and more preferably optionally automatically, set treatment parameters adapted to the at least one determined washware category; and/or
- determine time periods during at least one washing day, washing shift, or washing week of the warewasher (1), in which at least predominantly strongly soiled washware is to be treated by the warewasher (1), and, for these time periods, to proactively and in particular predictively, preferably automatically and more preferably optionally automatically, set treatment parameters adapted to the degree of soiling and/or the type of soiling; and/or
- determine time periods during at least one washing day, washing shift, or washing week of the warewasher (1), in which at least predominantly lightly soiled washware is to be treated by the warewasher (1), and, for these time periods, to proactively and in particular predictively, preferably automatically and more preferably optionally automatically, set treatment parameters adapted to the degree of soiling and/or the type of soiling.

15. A method for operating a commercial warewasher (1) according to one of claims 1 to 14, wherein the warewasher (1) comprises at least one washing system for washing the washware to be treated, at least one rinsing system for rinsing the washed washware, and optionally at least one drying system for optionally drying the rinsed washware, and wherein the method comprises the following method steps:
- with the aid of a camera system (34), images of the washware to be treated in the warewasher (1) or of the washware treated in the warewasher (1) are preferably taken continuously or at predefined or definable times and/or events;
- the evaluation device creates a pattern relating to the temporal usage behavior of the operator of the warewasher (1) is created, in particular in the course of a profiling process based on the captured images; and
- During operation of the warewasher (1), the control device (36) automatically, and preferably selectively, sets at least one predetermined treatment parameter in a wash cycle, wash day, or wash week, according to which the items to be washed are treated during washing, rinsing, and/or optional drying, depending on the pattern created, in a proactive and, in particular, predictive manner and/or, in particular, varies over time.

## Revendications

1. Lave-vaisselle (1) du commerce ayant au moins un système de lavage pour laver la vaisselle, avec au moins un système de rinçage pour rincer la vaisselle lavée et facultativement un système de séchage pour le séchage facultatif de la vaisselle rincée, dans lequel le lave-vaisselle (1) comprend un système de caméra (34), qui est configuré de manière à capturer des images, de préférence en continu ou lors de temps et/ou d'événements prédéfinis ou définissables, de la vaisselle à traiter dans le lave-vaisselle (1) ou de la vaisselle traitée dans le lave-vaisselle (1), **caractérisé en ce que**
le lave-vaisselle (1) est conçu pour déterminer, dans le cadre d'une phase d'apprentissage ou d'observation, à quelles périodes d'une équipe de lavage ou d'une journée de lavage du lave-vaisselle (1) quelle classe de vaisselle doit être traitée de manière prédominante,
dans lequel un dispositif d'évaluation est en outre prévu, qui est configuré de manière à créer un modèle concernant le comportement d'utilisation dans le temps de l'opérateur du lave-vaisselle (1), en particulier au cours d'un processus de profilage basé sur les images capturées,
dans lequel le lave-vaisselle (1) comprend en outre un dispositif de commande (36), qui est configuré de manière à régler de manière proactive et en particulier prédictive et/ou à faire varier temporellement au moins un paramètre de traitement en fonction duquel la vaisselle doit être traitée pendant le lavage, rinçage, et/ou un séchage facultatif pendant le fonctionnement du lave-vaisselle (1) au cours d'une équipe de lavage, au cours d'une journée de lavage, ou au cours d'une semaine de lavage, de préférence automatiquement et de manière encore davantage préférée facultativement automatiquement, comme une fonction du modèle créé.

2. Lave-vaisselle (1) selon la revendication 1, dans lequel le dispositif d'évaluation est en outre configuré, comme une fonction du modèle créé concernant le comportement d'utilisation dans le temps de l'opérateur du lave-vaisselle (1), pour générer des statistiques et/ou une notification correspondante et pour fournir en sortie ces dernières à l'opérateur du lave-vaisselle (1) et/ou au fabricant du lave-vaisselle (1) et/ou à son distributeur, dans lequel la notification contient de préférence une recommandation pour un fonctionnement du lave-vaisselle (1) qui est optimisé, en particulier en ce qui concerne l'efficacité de nettoyage et en ce qui concerne la conservation des ressources, et/ou dans lequel la recommandation est de préférence une recommandation de mise à niveau ou de modernisation du lave-vaisselle (1) avec un programme de traitement optimisé et/ou une recommandation d'utilisation d'un produit chimique, en particulier des produits chimiques de nettoyage, adapté au comportement d'utilisation de l'opérateur du lave-vaisselle (1).

3. Lave-vaisselle (1) selon la revendication 2, dans lequel l'au moins un paramètre de traitement, qui est réglé de manière proactive et en particulier de manière prédictive et/ou variable dans le temps comme une fonction du modèle créé, est choisi dans le groupe suivant :
- une température d'un liquide de lavage qui est pulvérisé sur la vaisselle pour laver la vaisselle ;
- une quantité de liquide de lavage pulvérisée sur la vaisselle par unité de temps pendant le lavage de la vaisselle ;
- une pression de buse du liquide de lavage pulvérisé sur la vaisselle pendant le lavage de la vaisselle ;
- une concentration en agent de nettoyage du liquide de lavage pulvérisé sur la vaisselle pendant le lavage de la vaisselle ;
- une durée d'une opération de lavage ;
- une température d'un liquide de rinçage qui est pulvérisé sur la vaisselle pour rincer la vaisselle ;
- une quantité de liquide de rinçage pulvérisée sur la vaisselle par unité de temps pendant le rinçage de la vaisselle ;
- une pression de buse du liquide de rinçage pulvérisé sur la vaisselle pendant le rinçage de la vaisselle ;
- une concentration d'aide au rinçage du liquide de rinçage pulvérisé sur la vaisselle pendant le rinçage de la vaisselle ;
- une durée d'une opération de rinçage ;
- une température d'un air de séchage qui est soufflé sur la vaisselle pour sécher facultativement la vaisselle ;
- une quantité d'air de séchage soufflé sur la vaisselle par unité de temps pendant le séchage facultatif de la vaisselle ;
- une pression à laquelle l'air de séchage est soufflé sur la vaisselle pendant le séchage facultatif de la vaisselle ; et/ou
- une durée d'une opération de séchage facultative.

4. Lave-vaisselle (1) selon l'une des revendications 1 à 3,
dans lequel, pour créer l'image globale concernant le comportement d'utilisation dans le temps de l'opérateur du lave-vaisselle (1), le dispositif d'évaluation est configuré de manière à effectuer ce qui suit, en particulier pendant la phase d'apprentissage ou d'observation sur au moins une période d'observation et de préférence sur une pluralité de périodes d'observation, chacune concernant de préférence une équipe de lavage du lave-vaisselle (1), une journée de lavage du lave-vaisselle (1), une semaine de lavage du lave-vaisselle, ou une portion de celles-ci,
- déterminer un profil temporel d'un niveau de charge, en particulier moyen, du lave-vaisselle (1) avec de la vaisselle ; et/ou
- déterminer un profil temporel d'un chargement, en particulier moyen, du lave-vaisselle (1) avec de la vaisselle ayant au moins une catégorie de vaisselle prédéfinie ou définissable ; et/ou
- déterminer un profil temporel d'un degré, en particulier moyen, de salissure de la vaisselle à traiter dans le lave-vaisselle (1) ; et/ou
- déterminer un profil temporel d'un type, en particulier moyen, de salissure de la vaisselle à traiter dans le lave-vaisselle (1),
et, sur la base du profil temporel déterminé du niveau de charge, en particulier moyen, du lave-vaisselle (1) avec de la vaisselle, sur la base du profil temporel du chargement, en particulier moyen, du lave-vaisselle (1) avec de la vaisselle ayant l'au moins une catégorie de vaisselle prédéfinie ou définissable, sur la base du profil temporel déterminé du degré, en particulier moyen, de salissure de la vaisselle à traiter dans le lave-vaisselle (1), et/ou sur la base du profil temporel déterminé du type, en particulier moyen, de salissure de la vaisselle à traiter dans le lave-vaisselle (1), pour dériver un modèle d'un ensemble de règles, dans lequel la phase d'apprentissage ou d'observation peut de préférence être lancée manuellement.

5. Lave-vaisselle (1) selon la revendication 4, dans lequel le dispositif d'évaluation est configuré de manière à évaluer les images capturées par le système de caméra (34) et à déterminer si au moins l'une des catégories de vaisselle suivantes a été présente au moment de la capture d'image correspondante :
- couverts ou pièces de coutellerie ;
- casseroles, bacs ou récipients GN ;
- verres, en particulier des verres à boire ;
- plateaux ou objets en forme de plateau ;
- assiettes, tasses ou bols ;
- ustensiles ;
- autres éléments de vaisselle ;
- éléments de vaisselle mélangés ; et/ou - éléments de vaisselle en plastique.

6. Lave-vaisselle (1) selon la revendication 4 ou 5, dans lequel le dispositif d'évaluation est configuré afin de déterminer, en particulier pendant la phase d'apprentissage ou d'observation sur l'au moins une période d'observation, un profil temporel d'un degré, de préférence moyen, de salissure de la vaisselle existant dans la région de capture d'image du système de caméra (34) au moment de la capture d'image correspondante et/ou un profil temporel d'un type, de préférence moyen, de salissure de la vaisselle existant dans la région de capture d'image du système de caméra (34) au moment de la capture d'image correspondante, dans lequel le lave-vaisselle (1) comprend un dispositif de commande (36), qui est configuré pour, proactivement et en particulier de manière prédictive, de préférence automatiquement et de manière encore davantage préférée facultativement automatiquement comme une fonction du profil temporel déterminé du degré, en particulier moyen, de salissure de la vaisselle et/ou comme une fonction du profil temporel déterminé du type, en particulier moyen, de salissure de la vaisselle, lancer au moins une mesure influençant la qualité d'un liquide de lavage à pulvériser par le système de lavage et/ou de manière proactive et en particulier de manière prédictive au moins une mesure influençant la puissance de nettoyage du lave-vaisselle (1).

7. Lave-vaisselle (1) selon la revendication 6, dans lequel le dispositif de commande (36) est configuré afin de régler de manière proactive et en particulier prédictive un débit volumétrique et/ou une pression de buse et/ou une température du liquide de lavage à pulvériser par le système de lavage pour régler ou ajuster la performance de nettoyage du lave-vaisselle (1) comme une fonction du profil temporel déterminé du degré, en particulier moyen, de salissure de la vaisselle et/ou comme une fonction du profil temporel déterminé du type, en particulier moyen, de salissure de la vaisselle ; et/ou
dans lequel le dispositif de commande (36) est configuré afin de régler de manière proactive et en particulier prédictive une concentration d'agent de nettoyage du liquide de lavage à pulvériser par le système de lavage pour régler ou ajuster la performance de nettoyage du lave-vaisselle (1) comme une fonction du profil temporel déterminé du degré, en particulier moyen, de salissure de la vaisselle et/ou comme une fonction du profil temporel déterminé du type, en particulier moyen, de salissure de la vaisselle ; et/ou
dans lequel le dispositif de commande (36) est configuré afin de régler de manière proactive et en particulier prédictive une durée d'une opération de lavage et/ou une durée d'une opération de rinçage pour régler ou ajuster la performance de nettoyage du lave-vaisselle (1) comme une fonction du profil temporel déterminé du degré, en particulier moyen, de salissure de la vaisselle et/ou comme une fonction du profil temporel déterminé du type, en particulier moyen, de salissure de la vaisselle ; et/ou
dans lequel le dispositif de commande (36) est configuré afin de régler de manière proactive et en particulier prédictive une quantité d'eau de rinçage claire introduite par le système de rinçage pour régler ou ajuster la performance de nettoyage du lave-vaisselle (1) comme une fonction du profil temporel déterminé du degré, en particulier moyen, de salissure de la vaisselle et/ou comme une fonction du profil temporel déterminé du type, en particulier moyen, de salissure de la vaisselle ; et/ou
dans lequel le dispositif de commande (36) est configuré afin de régler de manière proactive et en particulier prédictive une quantité de régénération de cuve de lavage séparée pour régler ou ajuster la performance de nettoyage du lave-vaisselle (1) comme une fonction du profil temporel déterminé du degré, en particulier moyen, de salissure de la vaisselle et/ou comme une fonction du profil temporel déterminé du type, en particulier moyen, de salissure de la vaisselle ; et/ou
dans lequel le dispositif de commande (36) est configuré afin de régler et/ activer de manière proactive et en particulier prédictive un dispositif de machine séparé et en particulier supplémentaire [sic : dispositif], en particulier un système de pulvérisation directe d'agent de nettoyage pour régler ou ajuster la performance de nettoyage du lave-vaisselle (1) comme une fonction du profil temporel déterminé du degré, en particulier moyen, de salissure de la vaisselle et/ou comme une fonction du profil temporel déterminé du degré, en particulier moyen, de salissure de la vaisselle ; et/ou
dans lequel le dispositif de commande (36) est configuré afin d'activer de manière proactive et en particulier prédictive un module d'élimination préalable ou de lavage supplémentaire pour traiter de la vaisselle particulièrement sale pour régler ou ajuster la performance de nettoyage du lave-vaisselle (1) comme une fonction du profil temporel déterminé du degré, en particulier moyen, de salissure de la vaisselle et/ou comme une fonction du profil temporel déterminé du degré, en particulier moyen, de salissure de la vaisselle ; et/ou

8. Lave-vaisselle (1) selon la revendication 6 ou 7, dans lequel le dispositif de commande (36) est configuré afin de régénérer de manière proactive et en particulier prédictive, de préférence automatiquement et de manière encore davantage préférée automatiquement comme une fonction du profil temporel déterminé du degré, en particulier moyen, de salissure de la vaisselle et/ou comme une fonction d'un profil temporel déterminé du type, en particulier moyen, de salissure de la vaisselle, le liquide de lavage devant être pulvérisé par l'au moins un système de lavage, c'est-à-dire par réglage, de manière proactive et en particulier de manière prédictive, en particulier de manière commandée, une quantité d'eau de régénération à ajouter par unité de temps au liquide de lavage à pulvériser par unité de temps, de préférence comme une fonction d'un profil temporel déterminé du degré, en particulier moyen, de salissure de la vaisselle et/ou comme une fonction du profil temporel déterminé du type, en particulier moyen, de salissure de la vaisselle.

9. Lave-vaisselle (1) selon l'une des revendications 6 à 8, dans lequel le dispositif de commande (36) est configuré afin de régler de manière proactive et en particulier prédictive, de préférence automatiquement et de manière encore davantage préférée automatiquement comme une fonction du profil temporel déterminé du degré, en particulier moyen, de salissure de la vaisselle et/ou comme une fonction du profil temporel déterminé du type, en particulier moyen, de salissure de la vaisselle, la capacité de charge de saleté du liquide de lavage devant être pulvérisé par l'au moins un système de lavage, ou pour au moins l'ajuster au profil temporel déterminé du degré, en particulier moyen, de salissure et/ou du profil temporel déterminé du type, en particulier moyen, de salissure de la vaisselle.

10. Lave-vaisselle (1) selon la revendication 9, dans lequel le moyen de commande (36) est configuré pour régler de manière proactive et en particulier de manière prédictive, en particulier de manière commandée, une température du liquide de lavage et/ou une concentration d'agent de nettoyage du liquide de lavage pour régler ou ajuster la capacité de charge de saleté du liquide de lavage à pulvériser par l'au moins un système de lavage.

11. Lave-vaisselle (1) selon l'une quelconque des revendications 4 à 10, dans lequel le moyen de commande (36) est en outre configuré de manière à diviser la période de traitement, qui concerne de préférence une équipe de lavage, une journée de lavage, ou une semaine de lavage du lave-vaisselle (1), ou une période de celles-ci, en une première sous-période et en au moins une deuxième sous-période supplémentaire, dans lequel :
- dans la première sous-période de la période d'observation, un niveau de charge, en particulier moyen, déterminé du lave-vaisselle (1) avec la vaisselle correspond à une première valeur relative ou tombe au sein d'une première plage de valeurs relatives, dans lequel, dans l'au moins une deuxième sous-période de la période d'observation, le niveau de charge, en particulier moyen, déterminé du lave-vaisselle (1) avec de la vaisselle correspond à une deuxième valeur relative ou tombe au sein d'une deuxième plage de valeurs relatives, dans lequel la première valeur relative du niveau de charge, en particulier moyen, du lave-vaisselle (1) avec de la vaisselle correspond à un chargement du lave-vaisselle (1) avec de la vaisselle qui est de préférence supérieur au chargement du lave-vaisselle (1) avec de la vaisselle correspondant à la deuxième valeur relative du niveau de charge, en particulier moyen, du lave-vaisselle (1) avec de la vaisselle ; et/ou
- dans la première sous-période de la période d'observation, un niveau de charge, en particulier moyen, déterminé du lave-vaisselle (1) avec au moins une catégorie de vaisselle prédéfinie ou définissable correspond à une première valeur relative ou tombe au sein d'une première plage de valeurs relatives, dans lequel, dans l'au moins une deuxième sous-période de la période d'observation, le niveau de charge, en particulier moyen, déterminé du lave-vaisselle (1) avec au moins une catégorie de vaisselle prédéfinie ou définissable correspond à une deuxième valeur relative ou tombe au sein d'une deuxième plage de valeurs relatives, dans lequel la première valeur relative du niveau de charge, en particulier moyen, du lave-vaisselle (1) avec l'au moins une catégorie de vaisselle prédéfinie ou définissable correspond à un chargement du lave-vaisselle (1) avec l'au moins une catégorie de vaisselle prédéfinie ou définissable qui est de préférence supérieur au chargement du lave-vaisselle (1) avec l'au moins une catégorie de vaisselle prédéfinie ou définissable correspondant à la deuxième valeur relative du niveau de charge, en particulier moyen, du lave-vaisselle (1) avec l'au moins une catégorie de vaisselle prédéfinie ou définissable ; et/ou
- dans la première sous-période de la période d'observation, un degré, en particulier moyen, déterminé de salissure de la vaisselle à traiter dans le lave-vaisselle (1) correspond à une première valeur relative ou tombe au sein d'une première plage de valeurs relatives, dans lequel, dans l'au moins une deuxième sous-période de la période d'observation, le degré, en particulier moyen, déterminé de salissure de la vaisselle à traiter dans le lave-vaisselle (1) correspond à une deuxième valeur relative ou tombe au sein d'une deuxième plage de valeurs relatives, dans lequel la première valeur relative du degré, en particulier moyen, de salissure de la vaisselle correspond à une entrée de salissure dans le lave-vaisselle (1) qui est de préférence supérieure à l'entrée de salissure dans le lave-vaisselle (1) correspondant à la deuxième valeur relative du degré, en particulier moyen, de salissure de la vaisselle ; et/ou
- dans la première sous-période de la période d'observation, un type, en particulier moyen, déterminé de salissure de la vaisselle à traiter dans le lave-vaisselle (1) correspond à une première valeur relative ou tombe au sein d'une première plage de valeurs relatives, dans lequel, dans l'au moins une deuxième sous-période de la période d'observation, le type, en particulier moyen, déterminé de salissure de la vaisselle à traiter dans le lave-vaisselle (1) correspond à une deuxième valeur relative ou tombe au sein d'une deuxième plage de valeurs relatives, dans lequel la première valeur relative du type, en particulier moyen, de salissure de la vaisselle correspond à un type de salissure de la vaisselle qui est différent du type de salissure de la vaisselle correspondant à la deuxième valeur relative du type, en particulier moyen, de salissure de la vaisselle.

12. Lave-vaisselle (1) selon la revendication 11, dans lequel le dispositif de commande (36) est en outre configuré afin de sélectionner de manière proactive et de préférence de régler de manière prédictive en conséquence, en particulier après la fin de la phase d'apprentissage ou d'observation, de préférence automatiquement et de manière encore davantage préférée automatiquement pendant le fonctionnement du lave-vaisselle (1) au cours d'une équipe de lavage, au cours d'une journée de lavage, ou au cours d'une semaine de lavage pour la première sous-période, au moins un premier paramètre de traitement en particulier prédéfini, selon lequel la vaisselle doit être traitée pendant le lavage, rinçage, et/ou un séchage facultatif pendant la première sous-période, et pour l'au moins une deuxième sous-période, pour sélectionner de manière proactive et de préférence régler de manière prédictive en conséquence au moins un deuxième paramètre de traitement, en particulier prédéfini, selon lequel la vaisselle doit être traitée pendant le lavage, le rinçage, et/ou un séchage facultatif pendant la deuxième sous-période au moins.

13. Lave-vaisselle (1) selon la revendication 11 ou 12, dans lequel la première sous-période est au moins une première fenêtre d'une journée de lavage, d'une équipe de lavage, ou d'une semaine de lavage du lave-vaisselle (1), et dans lequel la deuxième sous-période est au moins une fenêtre différente de la première fenêtre d'une journée de lavage, d'une équipe de lavage, ou d'une semaine de lavage du lave-vaisselle (1) ; ou
dans lequel la première sous-période est au moins un premier jour de la semaine, et dans lequel la deuxième sous-période est au moins un deuxième jour de la semaine qui est différent du premier jour de la semaine.

14. Lave-vaisselle (1) selon l'une des revendications 1 à 13, dans lequel le dispositif d'évaluation est configuré afin de déterminer une utilisation spécifique à l'opérateur du lave-vaisselle (1), en particulier sur une période de temps prédéfinie ou définissable, en particulier correspondant à une phase d'apprentissage ou d'observation, et dans lequel le dispositif d'évaluation est en outre configuré afin d'effectuer ce qui suit, sur la base de l'utilisation déterminée, spécifique à l'opérateur, du lave-vaisselle (1), en particulier sur la période de temps prédéfinie ou définissable :
- déterminer au moins une première période de temps pendant au moins une journée de lavage, une équipe de lavage ou une semaine de lavage du lave-vaisselle (1) dans laquelle seul un nombre relativement petit d'articles à laver doit être traité par le lave-vaisselle (1) par unité de temps, et au moins une deuxième période de temps pendant au moins une journée de lavage, une équipe de lavage ou une semaine de lavage du lave-vaisselle
(1) pour déterminer dans lequel des lave-vaisselle (1) un nombre relativement élevé d'articles à laver doivent être traités par unité de temps, et pour ces périodes de temps pour régler des paramètres de traitement adaptés au nombre d'articles à laver par unité de temps, de préférence automatiquement et de manière encore davantage préférée facultativement automatiquement de manière proactive et en particulier prédictive ; et/ou
- déterminer des périodes de temps pendant au moins une journée de lavage, une équipe de lavage ou une semaine de lavage du lave-vaisselle (1), dans lesquelles au moins une catégorie particulière de vaisselle doit être traitée par le lave-vaisselle (1) au moins de manière prédominante, et, pour ces périodes de temps, pour régler de manière proactive et en particulier prédictive, de préférence automatiquement et de manière davantage préférée de manière automatique, des paramètres de traitement adaptés à l'au moins une catégorie de vaisselle déterminée ; et/ou
- déterminer des périodes de temps pendant au moins une journée de lavage, une équipe de lavage ou une semaine de lavage du lave-vaisselle (1), dans lesquelles au moins de manière prédominante de la vaisselle particulièrement sale doit être traitée par le lave-vaisselle (1), et, pour ces périodes de temps, pour régler de manière proactive et en particulier prédictive, de préférence automatiquement et de manière davantage préférée de manière automatique, des paramètres de traitement adaptés au degré de salissure et/ou au type de salissure ; et/ou
- déterminer des périodes de temps pendant au moins une journée de lavage, une équipe de lavage ou une semaine de lavage du lave-vaisselle (1), dans lesquelles au moins de manière prédominante de la vaisselle légèrement sale doit être traitée par le lave-vaisselle (1), et, pour ces périodes de temps, pour régler de manière proactive et en particulier prédictive, de préférence automatiquement et de manière davantage préférée de manière automatique, des paramètres de traitement adaptés au degré de salissure et/ou au type de salissure.

15. Procédé pour faire fonctionner un lave-vaisselle du commerce (1) selon l'une des revendications 1 à 14, dans lequel le lave-vaisselle (1) comprend au moins un système de lavage pour laver la vaisselle à traiter, au moins un système de rinçage pour rincer la vaisselle lavée, et facultativement au moins un système de séchage pour sécher facultativement la vaisselle rincée, et dans lequel le procédé comprend les étapes de procédé suivantes :
- à l'aide d'un système de caméra (34), des images de la vaisselle à traiter dans le lave-vaisselle (1) ou de la vaisselle traitée dans le lave-vaisselle (1) sont de préférence prises en continu ou lors de temps et/ou d'événements prédéfinis ou définissables ;
- le dispositif d'évaluation crée un modèle concernant le comportement d'utilisation dans le temps de l'opérateur du lave-vaisselle (1) est créé, en particulier au cours d'un processus de profilage basé sur les images capturées ; et
- Pendant le fonctionnement du lave-vaisselle (1), le dispositif de commande (36) règle automatiquement, et de préférence sélectivement, au moins un paramètre de traitement prédéterminé au cours d'un cycle de lavage, d'une journée de lavage ou d'une semaine de lavage, selon lequel les articles à laver sont traités pendant le lavage, le rinçage et/ou le séchage facultatif, en fonction du modèle créé, de manière proactive et, en particulier, prédictive et/ou, en particulier, variable dans le temps.
